(19) Europäisches Patentamt / European Patent Office / Office européen des brevets

(11) **EP 4 438 579 A1**

(12) **EUROPEAN PATENT APPLICATION**

(43) Date of publication:
02.10.2024 Bulletin 2024/40

(21) Application number: 24165427.6

(22) Date of filing: **22.03.2024**

(51) International Patent Classification (IPC):
**C04B 35/486** (2006.01)   **C01G 25/00** (2006.01)
**C04B 35/626** (2006.01)   **C04B 35/64** (2006.01)
**H01M 10/0562** (2010.01)

(52) Cooperative Patent Classification (CPC):
**C04B 35/486; C01G 25/006; C04B 35/62615;
C04B 35/64; H01M 10/052; H01M 10/0562;**
C04B 2235/3201; C04B 2235/3203;
C04B 2235/3206; C04B 2235/3208;
C04B 2235/3213; C04B 2235/3215;
C04B 2235/3217; C04B 2235/3224;
C04B 2235/3227;                          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 24.03.2023   KR 20230038988
04.05.2023   KR 20230058490
20.11.2023   KR 20230161447
20.03.2024   KR 20240038304

(71) Applicant: Samsung Electronics Co., Ltd.
Suwon-si, Gyeonggi-do 16677 (KR)

(72) Inventors:
• KWON, Giyun
  16678 Suwon-si (KR)
• GWON, Hyeokjo
  16678 Suwon-si (KR)
• BAE, Youngjoon
  16678 Suwon-si (KR)
• KIM, Jusik
  16678 Suwon-si (KR)
• KIM, Taeyoung
  16678 Suwon-si (KR)

(74) Representative: Elkington and Fife LLP
Prospect House
8 Pembroke Road
Sevenoaks, Kent TN13 1XR (GB)

(54) **SOLID-STATE ELECTROLYTE, PREPARATION METHOD OF SOLID-STATE ELECTROLYTE, AND LITHIUM BATTERY COMPRISING SOLID-STATE ELECTROLYTE**

(57) A solid-state electrolyte containing a compound represented by Formula 1 :

$$\text{Formula 1} \qquad (Li_xM1_a)(La_yM2_b)(Zr_zM3_c)O_{12}$$

wherein in Formula 1, M1 is a monovalent cation, a divalent cation, a trivalent cation, or a combination thereof, M2 is a monovalent cation, divalent cation, a trivalent cation, or a combination thereof, M3 is a monovalent cation, a divalent cation, a trivalent cation, a tetravalent cation, a pentavalent cation, a hexavalent cation, or a combination thereof, $6 \leq x \leq 8$, $0 \leq a \leq 2$, $2 \leq y \leq 3$, $0 \leq b \leq 1$, $0 < z \leq 2$, and $0 \leq c \leq 2$,
wherein in an extended X-ray absorption fine structure spectrum of Zr in the solid-state electrolyte, a ratio of an intensity of a first peak corresponding to an interatomic distance of $1.5 \pm 0.5$ angstroms and an intensity of a second peak corresponding to an interatomic distance of $3.5 \pm 0.5$ angstroms is about 0.3 to about 0.75, and an ionic conductivity of the solid-state electrolyte is about $7 \times 10^{-6}$ to about $1 \times 10^{-2}$ Siemens per centimeter.

**(Cont. next page)**

# FIG. 4

(52) Cooperative Patent Classification (CPC): (Cont.)
C04B 2235/3229; C04B 2235/3239; C04B 2235/3251; C04B 2235/3286; C04B 2235/3287; C04B 2235/3293; C04B 2235/3294; C04B 2235/3296; C04B 2235/3298; C04B 2235/5436; C04B 2235/5463; C04B 2235/6583; C04B 2235/76; C04B 2235/762; C04B 2235/764; C04B 2235/765; H01M 2300/0071

**Description**

FIELD OF THE INVENTION

The disclosure relates to a solid-state electrolyte, a preparation method therefor, and a lithium battery comprising the same.

BACKGROUND OF THE INVENTION

Lithium batteries may provide improved specific energy (Watt hours per kilogram, Wh/kg) and/or energy density (Watt·hours per cubic centimeter, Wh/cc).

For improved stability, lithium batteries may include a solid-state electrolyte. When a solid-state electrolyte is used, there is no risk of fire and the preparation process can be simplified.

Among the solid-state electrolytes, a garnet-type (e.g., garnet) oxide solid-state electrolyte is one of the materials having high ionic conductivity, and is known as a key material for oxide all-solid-state batteries based on its excellent chemical stability with lithium. The garnet-type oxide solid-state electrolyte has high theoretical lithium ion conductivity, but is an oxide-based (i.e., oxide-containing) material, and thus, to achieve actual lithium ion conductivity close to the theoretical value, a densification process through sintering at a high temperature of about 1,200 °C is desired. To this end, a method of lowering the sintering temperature by introducing various sintering agents is used. However, using such sintering agents has limitations in the extent of improving sintering temperatures, and in particular, when existing garnet elements and heterogeneous materials are used together, additional interface formation and side reaction issues may occur. Thus, there remains a need for an improved solid-state electrolyte.

SUMMARY OF THE INVENTION

Provided is a novel solid-state electrolyte.

Provided is a lithium battery including the solid-state electrolyte.

Provided is a method for preparing the solid-state electrolyte.

Additional aspects will be set forth in part in the description which follows and, in part, will be apparent from the description, or may be learned by practice of the presented embodiments of the disclosure.

According to an aspect of the disclosure, provided is a solid-state electrolyte including a compound represented by Formula 1:

$$\text{Formula 1} \qquad (Li_xM1_a)(La_yM2_b)(Zr_zM3_c)O_{12}$$

wherein in Formula 1,

M1 is a monovalent cation, a divalent cation, a trivalent cation, or a combination thereof,
M2 is a monovalent cation, a divalent cation, a trivalent cation, or a combination thereof,
M3 is a monovalent cation, a divalent cation, a trivalent cation, a tetravalent cation, a pentavalent cation, a hexavalent cation, or a combination thereof,
$6 \leq x \leq 8$, $0 \leq a \leq 2$, $2 \leq y \leq 3$, $0 \leq b \leq 1$, $0 < z \leq 2$, and $0 \leq c \leq 2$,
wherein, in an extended X-ray absorption fine structure spectrum of Zr in the solid-state electrolyte, a ratio of an intensity of a first peak corresponding to an interatomic distance of $1.5 \pm 0.5$ angstroms and an intensity of a second peak corresponding to an interatomic distance of $3.5 \pm 0.5$ angstroms is about 0.3 to about 0.75, and
an ionic conductivity of the solid-state electrolyte is about $7 \times 10^{-6}$ Siemens per centimeter to about $1 \times 10^{-2}$ Siemens per centimeter.

In an aspect, provided is a solid-state electrolyte, which is a garnet solid-state electrolyte containing a compound represented by Formula 1, wherein, in an extended X-ray absorption fine structure (EXAFS) spectrum of Zr in the garnet solid-state electrolyte, the ratio $I_b/I_a$ of the intensity ($I_a$) of the first peak corresponding to an interatomic distance of 1.5 angstroms (Å)$\pm 0.5$ Å and the intensity ($I_b$) of the second peak corresponding to an interatomic distance of 3.0 Å$\pm 0.5$ Å is about 0.3 to about 0.75, and the ionic conductivity of the solid-state electrolyte is about $7 \times 10^{-6}$ Siemens per centimeter (S/cm) or greater,

$$\text{Formula 1} \qquad (Li_xM1_a)(La_yM2_b)(Zr_zM3_c)O_{12}$$

wherein in Formula 1,

M1 is monovalent, divalent, trivalent cation, or a combination thereof,
M2 is a monovalent, divalent, trivalent cation, or a combination thereof,
M3 is a monovalent, divalent, trivalent, tetravalent, pentavalent, hexavalent cation, or a combination thereof,
$6 \leq x \leq 8$, $0 \leq a \leq 2$, $2 \leq y \leq 3$, $0 \leq b \leq 1$, $0 < z \leq 2$, and $0 \leq c \leq 2$.

Provided is a solid-state electrolyte including a crystalline phase, wherein the solid-state electrolyte is represented by Formula 1:

Formula 1 $\qquad$ $(Li_xM1_a)(La_yM2_b)(Zr_zM3_c)O_{12}$

wherein in Formula 1, M1 is a monovalent cation, a divalent cation, a trivalent cation, or a combination thereof,
M2 is a monovalent cation, a divalent cation, a trivalent cation, or a combination thereof,
M3 is a monovalent cation, a divalent cation, a trivalent cation, a tetravalent cation, a pentavalent cation, a hexavalent cation, or a combination thereof,
$6 \leq x \leq 8$, $0 \leq a \leq 2$, $2 \leq y \leq 3$, $0 \leq b \leq 1$, $0 < z \leq 2$, and $0 \leq c \leq 2$,
wherein the crystalline phase has a cubic phase crystal structure as a major phase, and
a content of the cubic phase is about 60 weight percent or greater based on a total content of the crystalline phase.

In an aspect, the solid-state electrolyte is a garnet-type solid-state electrolyte including a crystalline phase, wherein, in an X-ray diffraction (XRD) spectrum of the solid-state electrolyte, a full width at half maximum of a peak at a diffraction angle of $16.8°2\theta \pm 0.5°2\theta$ is about $0.15°2\theta$ or greater, and an ionic conductivity of the solid-state electrolyte is about $7 \times 10^{-6}$ S/cm or greater.

The crystalline phase may include a cubic phase, wherein the cubic phase is at least 60% by weight based on a total content of the crystalline phase.

The crystalline phase may include a cubic phase and a tetragonal phase, wherein a content of the tetragonal phase is less than 10 wt% based on a total content of the crystalline phase.

In the XRD spectrum of the solid-state electrolyte, the full width at half maximum of the peak at the diffraction angle $2\theta=16.8°2\theta \pm 0.5°2\theta$ is $0.15°2\Theta$ or greater, $0.151°2\theta$ or greater, $0.152°2\theta$ or greater, $0.153°2\theta$ or greater, $0.154°2\theta$ or greater, $0.155°2\theta$ or greater, $0.157°2\theta$ or greater, or $0.159°2\Theta$ or greater.

According to another embodiment, in the XRD spectrum of the solid-state electrolyte, the full width at half maximum of the peak at the diffraction angle $2\theta=16.8°2\theta \pm 0.5°2\theta$ is $0.15°2\theta$ to $0.6°2\theta$, $0.151°2\theta$ to $0.6°2\theta$, $0.152°2\theta$ to $0.6°2\theta$, $0.152°2\theta$ to $0.6°2\theta$, $0.153°2\theta$ to $0.6°2\theta$, $0.154°2\theta$ to $0.6°2\theta$, $0.155°2\theta$ to $0.6°2\theta$, $0.156°2\theta$ to $0.6°2\theta$, $0.157°2\theta$ to $0.6°2\theta$, $0.158°2\theta$ to $0.6°2\theta$, $0.159°2\theta$ to $0.6°2\theta$, $0.159°2\Theta$ to $0.59°2\theta$, $0.159°2\Theta$ to $0.58°2\theta$, $0.159°2\Theta$ to $0.57°2\theta$, $0.159°2\theta$ to $0.56°2\theta$, $0.159°2\theta$ to $0.565°2\theta$, $0.159°2\theta$ to $0.55°2\theta$, $0.159°2\theta$ to $0.555°2\theta$, or $0.159°2\theta$ to $0.552°2\theta$.

The ionic conductivity of the solid-state electrolyte is about $7 \times 10^{-6}$ S/cm to about $1 \times 10^{-2}$ S/cm, or from about $7 \times 10^{-6}$ S/cm to about $1 \times 10^{-3}$ S/cm.

In the XRD spectrum of the solid-state electrolyte, the peak at the diffraction angle $2\theta=16.8° \pm 0.5°$ has a singlet shape.

The solid-state electrolyte represented by Formula 1 above is represented by Formula 2 or 3:

Formula 2 $\qquad$ $Li_x(La_yM2_b)(Zr_zM3_c)O_{12}$

wherein in Formula 2, M2 is calcium (Ca), strontium (Sr), cesium (Ce), barium (Ba), or a combination thereof,
M3 is aluminum (Al), tungsten (W), niobium (Nb), tantalum (Ta), or a combination thereof,
$6 \leq x \leq 8$, $2 \leq y \leq 3$, $0 \leq b \leq 1$, $0 < z \leq 2$, and $0.01 \leq c \leq 2$,

Formula 3 $\qquad$ $(Li_xM1_a)(La_y)(Zr_z)O_{12}$

wherein in Formula 3, M1 is Ga, Al, or both,
$6 \leq x \leq 8$, $0 \leq a \leq 2$, $2 \leq y \leq 3$, and $0 < z \leq 2$.

The solid-state electrolyte represented by Formula 1 above is an oxide represented by Formula 4:

Formula 4 $\qquad$ $Li_{3+x}La_3Zr_{2-a}M_aO_{12}$

wherein in Formula 4, M is Gallium (Ga), tungsten (W), niobium (Nb), tantalum (Ta), aluminum (Al), or a combination thereof,

$3 \leq x \leq 5$, and $0 \leq a \leq 0.7$.

The solid-state electrolyte has an activation energy of about 0.5 eV or less, and the solid-state electrolyte is electrochemically stable at a voltage of about 3.0 V or greater relative to lithium metal.

A thickness of the solid-state electrolyte may be about 0.1-500 micrometers ($\mu$m), 1-200 $\mu$m, or about 5-200 $\mu$m.

According to another aspect of the disclosure, provided is a lithium battery including: a positive electrode; a negative electrode; and a solid electrolyte disposed between the positive electrode and the negative electrode, wherein the positive electrode, the negative electrode, the solid electrolyte, or a combination thereof, includes the solid-state electrolyte.

The lithium battery is a lithium-ion battery, an all-solid-state battery, an oxide battery, or a multilayer ceramic (MLC) battery. The lithium battery employs the solid-state electrolyte that can be formed at low temperatures.

The positive electrode comprises the solid-state electrolyte containing the compound represented by Formula 1, and includes a crystalline phase.

According to another aspect of the disclosure, provided is a method for preparing the solid-state electrolyte, the method including: performing heat treatment on the a compound of Formula 1 having an amorphous phase at a temperature of 700 °C or lower in an oxidizing gas atmosphere:

$$<\text{Formula 1}> \qquad (Li_xM1_a)(La_yM2_b)(Zr_zM3_c)O_{12}$$

wherein in Formula 1,

M1 is a monovalent cation, a divalent cation, or a combination thereof,

M2 is a monovalent cation, a divalent cation, a trivalent cation, or a combination thereof,

M3 is a monovalent cation, a divalent cation, a trivalent cation, a tetravalent cation, a pentavalent cation, a hexavalent cation, or a combination thereof,

$6 \leq x \leq 8$, $0 \leq a \leq 2$, $2 \leq y \leq 3$, $0 \leq b \leq 1$, $0 < z \leq 2$, and $0 \leq c \leq 2$.

The compound of Formula 1 having the amorphous phase is obtained by high-energy mechanical milling of a precursor for forming the compound of Formula 1.

The high-energy mechanical milling may include high-energy ball milling, and the product particle size obtained by the high-energy mechanical milling is adjusted to 1 nm to 100 $\mu$m by the high-energy mechanical milling may be adjusted to 1 nanometer (nm) to 100 $\mu$m by the high-energy mechanical milling.

The heat treatment includes heat treating at about 400 °C to about 700 °C.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a graph of intensity (arbitrary units, a.u.) vs. diffraction angle (°2$\theta$) showing the results of X-ray diffraction analysis using CuK$\alpha$ radiation of solid electrolytes prepared in Examples 1 to 3 and Comparative Example 1;

FIGS. 2A to 2C are each a scanning electron micrograph showing the results of scanning electron microscopy (SEM) analyses performed on cross sections of solid-state electrolytes prepared in Example 1, Comparative Example 1, and Reference Example 1, respectively;

FIG. 3 is a graph of ionic conductivity ($\log_{10}(\sigma$, Siemens per centimeter, S/cm)) vs. 1000/Temperature (T) (1/Kelvin (K)) and shows ionic conductivity results according to temperature for Examples 1 to 3 and Comparative Examples 1 to 3;

FIG. 4 is a schematic diagram of an embodiment of a lithium-ion battery and shows the structure of the lithium-ion battery;

FIG. 5 is a schematic diagram of an embodiment of a lithium-ion battery and shows the structure of a lithium-ion battery;

FIG. 6 is a schematic diagram of an embodiment of a lithium-ion battery and shows the structure of a lithium-ion battery;

FIG. 7 is a schematic diagram of an embodiment of an all-solid-state battery and shows the structure of the all-solid-state battery;

FIG. 8 is a schematic diagram of an embodiment of an all-solid-state battery and shows the structure of the all-solid-state;

FIG. 9 is a schematic diagram of an embodiment of a multilayer ceramic battery and shows the structure of the multilayer ceramic battery;

FIG. 10 is a schematic diagram of an embodiment of a multilayer ceramic battery and shows the structure of the multilayer ceramic battery;

FIG. 11 is a schematic diagram of an embodiment of a multilayer ceramic battery and shows the structure of the multilayer ceramic battery; and

FIG. 12 is a graph of Fourier-transformed magnitude (a.u.) vs. interatomic distance (angstroms, Å) and shows the results of X-ray absorption fine structure (EXAFS) analysis of solid-state electrolytes of Examples 1 to 3, Comparative Example 1, and Reference Example 1.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept that will be described below is subject to various modifications and may have multiple embodiments, and certain embodiments are illustrated in the drawings and further described in the detailed description. However, this is not intended to limit the present inventive concept to any particular embodiment and is to be understood to include all transformations, equivalents, or substitutions that fall within the technical scope of the disclosure.

The terms used herein are used to describe certain embodiments only and are not intended to limit the present inventive concept. Singular expressions include plural expressions unless the context clearly dictates otherwise. As used herein, "a", "an", "the," and "at least one" do not denote a limitation of quantity, and are intended to include both the singular and plural, unless the context clearly indicates otherwise. For example, "an element" has the same meaning as "at least one element," unless the context clearly indicates otherwise. Thus, reference to "an" element in a claim followed by reference to "the" element is inclusive of one element and a plurality of the elements. "At least one" is not to be construed as limiting "a" or "an." "Or" means "and/or."

As used herein, it is to be understood that the terms such as "comprise," "have," "include," etc. are intended to indicate the presence of the features, numbers, steps, actions, components, parts, ingredients, materials, or combinations thereof disclosed in the specification, but do not preclude the possibility that one or more other features, numbers, steps, actions, components, parts, ingredients, materials, or combinations thereof may exist or may be added. The symbol "/" used herein may be interpreted as "and" or "or" according to the context.

In the drawings, the diameters, lengths, and thicknesses of layers and regions are exaggerated or reduced for clarity. Throughout the specification, like reference numerals refer to like elements. Throughout the specification, it is to be understood that when a component, such as a layer, a film, a region, or a plate, is referred to as being "on" another component, the component can be directly on the other component or intervening components may be present thereon. Throughout the specification, the terms "first," "second," etc. may be used to describe various elements, these elements should not be limited by these terms. These terms are only used to distinguish one element from another element.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompass both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value. All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.).

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

As used herein, "metal" includes both metals and metalloids, such as silicon and germanium, in their elemental or ionic states.

As used herein, "alloy" means a mixture of two or more metals.

As used herein, "positive electrode active material" refers to a positive electrode material that can undergo lithiation and de-lithiation.

As used herein, "negative electrode active material" refers to a negative electrode material that can undergo lithiation and de-lithiation.

As used herein, "lithiation" and "lithiate" refer to the process of adding lithium to a positive electrode active material or a negative electrode active material.

As used herein, "delithiating" and "delithiate" refer to the process of removing lithium from a positive electrode active material or a negative electrode active material.

As used herein, "charging" and "charge" refer to the process of providing electrochemical energy to a cell.

As used herein, "discharging" and "discharge" refer to the process of removing electrochemical energy from a battery.

As used herein, "positive electrode" and "cathode" refer to an electrode on which electrochemical reduction and lithiation occurs during the discharge process.

As used herein, "negative electrode" and "anode" refer to an electrode on which electrochemical oxidation and de-lithiation occurs during the discharge process.

As used herein, "garnet" or "garnet-type" means that the compound is isostructural with garnet, e.g., $Mg_3Al_2(SiO_4)_3$.

In this specification, the "particle size" of a particle refers to an average diameter when the particle is spherical, or an average major axis length when the particle is non-spherical. The particle diameter of a particle is measured by a particle size analyzer (PSA). The "particle diameter" of a particle is, for example, an average particle diameter. The average grain size is a median particle diameter (D50), unless otherwise explicitly stated. The median particle diameter (D50) is the size of a particle that corresponds to a cumulative value of 50%, calculated from the side of the particle with the smallest particle size on a cumulative distribution curve of particle sizes where particles accumulate in order of particle size from smallest to largest. A cumulative value can be, for example, a cumulative volume. The median particle diameter (D50) can be measured, for example, by laser diffraction.

When measured using an electron scanning microscope, the particle size is determined as the average of 30 or more randomly extracted particles of 1 micrometer (um) or greater, excluding fine powder.

The average particle diameter of a positive electrode active material may be measured using, for example, a laser diffraction method. More specifically, after dispersing a positive electrode active material in a solution and then irradiating ultrasonic waves at about 28 kilohertz (kHz) with an output of 60 watt (W) by introducing the positive electrode active material into a commercially available laser diffraction particle size measuring device (for example, Microtrac MT 3000), the average particle size (D50) based on 50% of the particle size distribution in a measuring device can be calculated.

As used herein, the term "D10" refers to the average diameter of particles whose cumulative volume corresponds to 10% by volume in the particle size distribution, and "D90" refers to the average diameter of particles, the cumulative volume of which corresponds to 90% by volume in the particle size distribution.

Hereinafter, a solid-state electrolyte according to an embodiment, a lithium battery including the same, and a method for preparing the solid-state electrolyte will be described in more detail.

[Solid-State Electrolyte]

A solid-state electrolyte according to an embodiment is a garnet (e.g., garnet-type) solid-state electrolyte containing a compound represented by Formula 1, wherein an ionic conductivity of the solid-state electrolyte is $7 \times 10^{-6}$ Siemens per centimeter (S/cm) or greater, in an extended X-ray absorption fine structure (EXAFS) spectrum of Zr in the garnet-type solid-state electrolyte, an intensity of a first peak corresponding to an interatomic distance of 1.5 angstroms ($\text{Å}$)$\pm 0.5 \text{Å}$ is $I_a$, and an intensity of a second peak corresponding to an interatomic distance of $3.0 \text{Å} \pm 0.5 \text{Å}$ is $I_b$, a ratio $I_b/I_a$ between the intensity ($I_a$) of the first peak and the intensity ($I_b$) of the second peak is about 0.3 or greater and about 0.75 or less.

$$\text{Formula 1} \qquad (Li_xM1_a)(La_yM2_b)(Zr_zM3_c)O_{12}$$

wherein in Formula 1, M1 is a monovalent, divalent, trivalent cation, or a combination thereof,

M2 is a monovalent, divalent, trivalent cation, or a combination thereof,

M3 is a monovalent, divalent, trivalent, tetravalent, pentavalent, hexavalent cation, or a combination thereof,

$6 \leq x \leq 8$, $0 \leq a \leq 2$, $2 \leq y \leq 3$, $0 \leq b \leq 1$, $0 < z \leq 2$, and $0 \leq c \leq 2$.

In Formula 1, x may be $6.1 \leq x \leq 8$, $6.3 \leq x \leq 7.9$, $6.5 \leq x \leq 7.7$, or $6.7 \leq x \leq 7.5$.

In Formula 1, a may be $0 \leq a \leq 2$, $0.5 \leq a \leq 1.8$, $0.7 \leq a \leq 1.8$, or $1 \leq a \leq 2$.

In Formula 1, y may be $2 \leq y \leq 3$, $2.3 \leq y \leq 3$, $2.5 \leq y \leq 3$, or $2.7 \leq y \leq 3$.

In Formula 1, b may be $0 \leq b \leq 1$, $0.3 \leq b \leq 1$, $0.5 \leq b \leq 1$, or $0.7 \leq b \leq 1$.

In Formula 1, z may be $0 < z \leq 2$, $0.3 \leq z \leq 2$, $0.5 \leq z \leq 1.8$, or $0.7 \leq z \leq 1.6$.

In Formula 1, c may be $0 \leq c \leq 2$, $0.1 \leq c \leq 2$, $0.3 \leq c \leq 2$, $0.5 \leq c \leq 2$, or $0.7 \leq c \leq 2$.

EXAFS analysis provides information about the local bonding structure of specific elements.

The intensity ratio is, for example, about 0.5 to about 0.7, about 0.6 to about 0.7, about 0.61 to about 0.69, or about 0.65 to about 0.69.

The solid-state electrolyte comprises a garnet-type crystalline phase, and in an X-ray diffraction (XRD) spectrum of the solid-state electrolyte, a half-width of a peak at a diffraction angle (2θ) of $16.8°2θ \pm 0.5°2θ$ is about 0.15°2θ or greater, when analyzed by XRD using CuKα radiation.

The interatomic distance of the first peak represents, for example, an interatomic distance between a zirconium (Zr) atom and an oxygen (O) atom (Zr-O) bonded thereto.

The interatomic distance of the second peak represents an interatomic distance between a Zr atom and a lanthanum (La) atom (Zr-La) bonded thereto.

A conductivity (e.g., ionic conductivity) of the solid-state electrolyte is influenced by a content of amorphous phases. The content of amorphous and crystalline phases or a mixing ratio thereof can be confirmed directly or indirectly through XRD analysis or transmission electron microscopy/selected area electron diffraction (TEM/SAED) analysis. Through the XRD analysis, dominantly maintained crystalline phases are selected and XRD Rietveld analysis is performed, thereby determining the mixing ratio of the crystalline phases.

The solid-state electrolyte containing a compound represented by Formula 1, may include an amorphous phase, and thus, while not wishing to be bound by theory, facilitates lithium transfer within the solid-state electrolyte compared to a crystalline solid-state electrolyte.

A thickness of the solid-state electrolyte may be about 0.1 to about 500 micrometers ($\mu$m), about 1 to about 300 $\mu$m, or about 5 to about 200 $\mu$m.

In order to manufacture a solid-state secondary battery having improved safety, it is desired to develop a solid-state secondary battery employing an oxide-based (i.e., oxide-containing) solid-state electrolyte that is stable in air.

However, due to the hard physical properties of the oxide-based solid-state electrolyte, the interfaces of the positive electrode and the solid-state electrolyte may non-uniformly contact with each other. To solve the non-uniform contacts between the positive electrode and the oxide-based solid-state electrolyte, a high-temperature sintering process of the positive electrode and the oxide-based solid-state electrolyte was proposed.

However, despite performing a high-temperature sintering process, the desired overall battery characteristics are not reached, even though the battery configuration achieves full-solidification in solid secondary batteries.

Accordingly, in order to solve the above-mentioned problems, the present inventors provide the solid-state electrolyte containing the compound represented by Formula 1.

In an aspect, the solid-state electrolyte comprises a crystalline phase.

The solid-state electrolyte according to an embodiment may include a cubic phase, which is a crystalline phase, and the cubic phase, based on a total content of the crystalline phase, is about 60% by weight or greater, about 60% to about 99% by weight, about 70% to about 95% by weight, about 70% by weight or more, about 80% by weight or more, or about 80% to about 90% by weight, and the remainder being an impurity. Here, the impurity refers to a phase that does not contain lithium, such as a pyrochlore phase.

When the content of the cubic phase is about 60% by weight or greater, the ionic conductivity of the solid-state electrolyte is improved. If the content of the cubic phase is less than the range stated above, the ionic conductivity of the solid-state electrolyte may not be sufficient.

The crystalline phase may include the cubic phase and a tetragonal phase, and a content of the tetragonal phase is less than about 10% by weight, about 1 to about 9.99% by weight, about 2 to about 9.5% by weight, about 3 to about 9% by weight, for example, 5% to 9% by weight, based on the total content of the crystalline phase. When the content of the tetragonal phase is within the range stated above, a solid-state electrolyte having high ionic conductivity in various temperature ranges and having low interfacial resistance between the positive electrode and the solid-state electrolyte during preparation of a lithium battery can be obtained.

According to an embodiment, the mixing ratio of the cubic phase and the tetragonal phase may be evaluated by Rietveld refinement using the peak of the crystal plane (004) cubic structure of the compound of Formula 1 ($2\theta$ = 27.5°) and a peak corresponding to crystal planes (040) and (004) of the tetragonal structure ($2\theta$ = 27 to 28°$2\theta$). The crystal structure of the solid-state electrolyte of a garnet structure may greatly depend on conditions such as heat treatment temperature and time.

According to another embodiment, the mixing ratio of the cubic phase and the tetragonal phase may be evaluated by Rietveld refinement using the peak of the crystal plane (004) cubic structure of the compound of Formula 1 ($2\theta$ = 27.5°) and the peak at the diffraction angle $2\theta$=16.8°$2\theta$ $\pm$0.5°$2\theta$. The crystal structure of the solid-state electrolyte of a garnet structure may greatly depend on conditions such as heat treatment temperature and time.

The solid-state electrolyte according to an embodiment does not comprise the tetragonal phase. In this case, the peak at the diffraction angle $2\theta$=16.8°$2\theta$ $\pm$0.5°$2\theta$ in the XRD spectrum of the solid-state electrolyte has a singlet shape. When the peak at the diffraction angle $2\theta$=16.8°$2\theta$ $\pm$0.5°$2\theta$ has a doublet shape, this means that a tetragonal phase exists.

In the XRD spectrum of the solid-state electrolyte, a full width at half maximum of the peak at the diffraction angle $2\theta$ = 16.8°$2\theta$ $\pm$ 0.5°$2\theta$ is an indicator of the crystallinity of the garnet structure and is the peak corresponding to the crystal plane (211) of the garnet structure, and when the full width at half maximum is about 0.15°$2\Theta$ or greater, the crystallinity of the solid-state electrolyte is optimized, and thus the solid-state electrolyte has improved ionic conductivity and improved stability.

In an aspect, the full width at half maximum is 0.15°$2\Theta$ to 0.6°$2\theta$, 0.15°$2\theta$ to 0.59°$2\theta$, 0.16°$2\theta$ to 0.58°$2\theta$, 0.16°$2\theta$ to 0.57°$2\theta$, or 0.16°$2\theta$ to 0.56°$2\theta$. The full width at half maximum in the range stated above is attributed to low crystallinity, and when the full width at half maximum is in the range stated above, the deformation characteristics due to mechanochemical amorphization of the solid-state electrolyte are improved, and weakened long-range ordering and a flexible structure are provided.

As described above, the solid-state electrolyte has improved deformation characteristics and can be molded into various shapes at low temperatures. In addition, since low-temperature molding is enabled, deformation of a structure is reduced when combined with a structure, such as an electrode, and the interface characteristics of the solid-state electrolyte and the structure can be stabilized.

A peak at a diffraction angle $2\theta$=28.3°$2\theta$ $\pm$0.5°$2\theta$ provides information about a phase other than the cubic phase and the tetragonal phase. Here, the other phase is a pyrochlore phase of $La_2Zr_2O_7$, which is a lithium-deficient phase and is a secondary phase that may appear when synthesizing a garnet structure.

In the XRD spectrum, a peak at a diffraction angle $2\theta$ = 30.0 $\pm$ 1.0°$2\theta$ corresponds to a crystal plane (420) of the garnet structure.

The ionic conductivity of the solid-state electrolyte containing the compound represented by Formula 1 at 25 °C is $7\times10^{-6}$ S/cm or greater, $7\times10^{-6}$ to $1\times10^{-2}$ S/cm, $5\times10^{-6}$ to $5\times10^{-2}$ S/cm, or $7\times10^{-5}$ to $1\times10^{-3}$ S/cm. By having an increased ionic conductivity in this range, the solid-state electrolyte containing the compound represented by Formula 1 can be used as an electrolyte for a lithium battery.

A lithium diffusion barrier of the solid-state electrolyte containing the compound represented by Formula 1 may be 625 millielectronvolts (meV) or less, 600 meV or less, 580 meV or less, 560 meV or less, 540 meV or less, 520 meV or less, or 500 meV or less. The lithium diffusion barrier of the solid-state electrolyte containing the compound represented by Formula 1 may be 10 to 625 meV, 30 to 600 meV, 50 to 580 meV, 70 to 560 meV, 100 to 540 meV, 120 to 520 meV, or 150 to 500 meV. By the solid-state electrolyte containing the compound represented by Formula 1 having a low lithium diffusion barrier in this range, lithium diffusion within the solid-state electrolyte can be facilitated and the ionic conductivity of the solid-state electrolyte can be improved.

An activation energy of the solid-state electrolyte containing the compound represented by Formula 1 may be 0.5 electronvolt (eV) or less, 0.4 eV or less, for example, 0.3 to 0.5 eV, 0.35 to 0.45 eV, or 0.4 to 0.45 eV. By the solid-state electrolyte containing the compound represented by Formula 1 having a low activation energy in this range, the ionic conductivity of the solid-state electrolyte can be improved.

The solid-state electrolyte containing the compound represented by Formula 1 has densified properties without undergoing a high-temperature sintering process, and has an improved relative density of 80% or greater, for example, 80 to 95%, 87 to 93%, or 85 to 90%. In this specification, the relative density was calculated by measuring the dimensions (diameter, or thickness) and mass of a sintered body. In addition, the relative density can be obtained using a pycnometer and the theoretical density of lithium lanthanum zirconium oxide (LLZO, 5.14 grams per cubic centimeter (g/cm$^3$)).

According to another embodiment, provided is a solid-state electrolyte, which is a solid-state electrolyte including a crystalline phase, wherein the solid-state electrolyte is represented by Formula 1, the crystalline phase has a cubic phase crystal structure as a major phase, and a content of the cubic phase is about 60% to about 99% by weight based on a total content of the crystalline phase.

The crystalline phase includes a cubic phase, wherein the cubic phase is at least about 60% by weight, about 60% to about 99% by weight, about 70% to about 95% by weight, or about 80% to about 90% by weight, based on the total content of the crystalline phase. In an aspect, the crystalline phase includes the cubic phase and a tetragonal phase, and

a content of the tetragonal phase is less than about 10 wt%, about 1 to less than about 10 wt%, about 1 to about 9.99% by weight, about 2 to about 9.5% by weight, about 3 to about 9% by weight, for example, about 5 to less than about 10 wt%, based on the total content of the crystalline phase.

When the content of the tetragonal phase is less than about 10 wt% based on the total content of the crystalline phase, the ionic conductivity of the solid-state electrolyte at 25 °C is high, which is $7\times10^{-6}$ S/cm or greater, for example, $7\times10^{-6}$ to $1\times10^{-2}$ S/cm.

The solid-state electrolyte containing the compound represented by Formula 1 may be electrochemically stable at a voltage of 3.0 volts (V) or greater relative to lithium metal, for example, 3.0 to 4.5 V.

In Formula 1, the monovalent cation in M1, M2, and M3, each independently includes Li, Na, K, or a combination thereof. The divalent to hexavalent cation in M1, M2, and M3, each independently includes Mg, Ca, Sr, Sc, Y, La, Ce, Pr, Nd, Sm, Eu, Gd, Tb, Dy, Ho, Er, Tm, Yb, Lu, Zr, Hf, V, Nb, Ta, Mo, W, Mn, Tc, Re, Fe, Ru, Os, Co, Rh, Ir, Ni, Pd, Pt, Cu, Ag, Au, Zn, Cd, Hg, Al, Ga, In, Tl, Ge, Sn, Pb, Sb, Bi, Po, As, Se, Te, or a combination thereof.

The solid-state electrolyte may contain a compound represented by Formula 2 or Formula 3:

$$\text{Formula 2} \qquad Li_x(La_yM2_b)(Zr_zM3_c)O_{12}$$

wherein in Formula 2, M2 is calcium (Ca), strontium (Sr), cesium (Ce), barium (Ba), or a combination thereof, M3 is aluminum (Al), tungsten (W), niobium (Nb), tantalum (Ta), or a combination thereof,
$6\leq x\leq8$, $2\leq y\leq3$, $0\leq b\leq1$, $0<z\leq2$, and $0.01\leq c\leq2$,

$$\text{Formula 3} \qquad (Li_xM1_a)(La_y)(Zr_z)O_{12}$$

wherein in Formula 3,
M1 is Ga Al, or both, $6\leq x\leq8$, $0\leq a\leq2$, $2\leq y\leq3$, and $0<z\leq2$.

The solid-state electrolyte may include, for example, an oxide represented by Formula 4 below,

$$<\text{Formula 4}> \qquad Li_{3+x}La_3Zr_{2-c}M3_cO_{12}$$

wherein in Formula 4, M3 is Gallium (Ga), tungsten (W), niobium (Nb), tantalum (Ta), aluminum (Al), or a combination thereof,
$3\leq x\leq5$, and $0\leq c\leq0.7$, for example, $0.05\leq a\leq0.7$.

According to an embodiment, the solid-state electrolyte may be, for example, $Li_7La_3Zr_2O_{12}$ (LLZO), $Li_{6.5}La_3Zr_{1.5}Ta_{0.5}O_{12}$, $Li_{65}La_3Zr_{1.5}Nb_{0.5}O_{12}$, $Li_{6.25}La_3Zr_2Al_{0.25}O_{12}$, etc.

According to another embodiment, the solid-state electrolyte may be, for example, $LixLa_3M_2O_{12}$ ($6\leq x\leq8$, M = Ta, Nb, or Zr), $Li_{6.24}La_3Zr_2Al_{0.24}O_{12}$, $Li_7La_3Zr_{1.7}W_{0.3}O_{12}$, $Li_{6.4}La_3Zr_{1.7}W_{0.3}O_{12}$, $Li_7La_3Zr_{1.5}W_{0.5}O_{12}$, $Li_7La_{2.75}Ca_{0.25}Zr_{1.75}Nb_{0.25}O_{12}$, $Li_7La_3Zr_{1.5}Nb_{0.5}O_{12}$, $Li_7La_3Zr_{1.5}Ta_{0.5}O_{12}$, $Li_{6.272}La_3Zr_{1.7}W_{0.3}O_{12}$, etc.

A form of the solid-state electrolyte containing the compound represented by Formula 1 is not particularly limited. The solid-state electrolyte containing the compound represented by Formula 1 may be, for example, in the form of particles. The particles may be spherical particles or non-spherical particles. The solid-state electrolyte may be molded into various shapes. The molded solid-state electrolyte may be in the form of, for example, a sheet.

[Lithium Battery]

A lithium battery according to another embodiment includes: a positive electrode; a negative electrode; and an electrolyte disposed between the positive electrode and the negative electrode,

wherein the positive electrode, the negative electrode, the electrolyte, or a combination thereof, includes the above-described solid-state electrolyte. The above-described solid-state electrolyte includes the compound represented by Formula 1. By including the solid-state electrolyte, the lithium battery may have reduced internal resistance and improved cycle characteristics. The lithium battery is not particularly limited and may be, for example, a lithium ion battery, an all-solid-state battery, a multilayer ceramic (MLC) battery, or a lithium air battery.

According to an embodiment, the positive electrode includes a solid-state electrolyte, which is a garnet-type ceramic solid-state electrolyte containing the compound represented by Formula 1 above and including the crystalline phase and the amorphous phase, and in the XRD spectrum of the solid-state electrolyte, the full width at half maximum at the peak at the diffraction angle $2\theta=16.8°2\theta \pm 0.5°2\theta$ is about $0.15°2\theta$ or greater, and the ionic conductivity of the solid-state electrolyte is about $7 \times 10^{-6}$ S/cm or greater.

According to another embodiment, the positive electrode contains a solid-state electrolyte, which is a garnet-type ceramic solid-state electrolyte including a crystalline phase and an amorphous phase, wherein the solid-state electrolyte is represented by Formula 1 above, and

the crystalline phase has a cubic phase crystal structure as a major phase, and a content of the cubic phase is 60 wt% or greater based on the total weight of the crystalline phase.

A thickness of the solid-state electrolyte according to an embodiment is 0.1 to 500 $\mu$m, or 1 to 200 $\mu$m, for example, 1 to 80 $\mu$m. When the solid-state electrolyte has a thickness in this range, the mechanical strength of the solid-state electrolyte is improved and the ionic conductivity thereof is improved.

When lithium batteries are manufactured using the solid-state electrolyte, very uniform interface characteristics can be secured between the solid-state electrolyte and the positive electrode.

These batteries will now be described in more detail.

(Lithium Ion Battery)

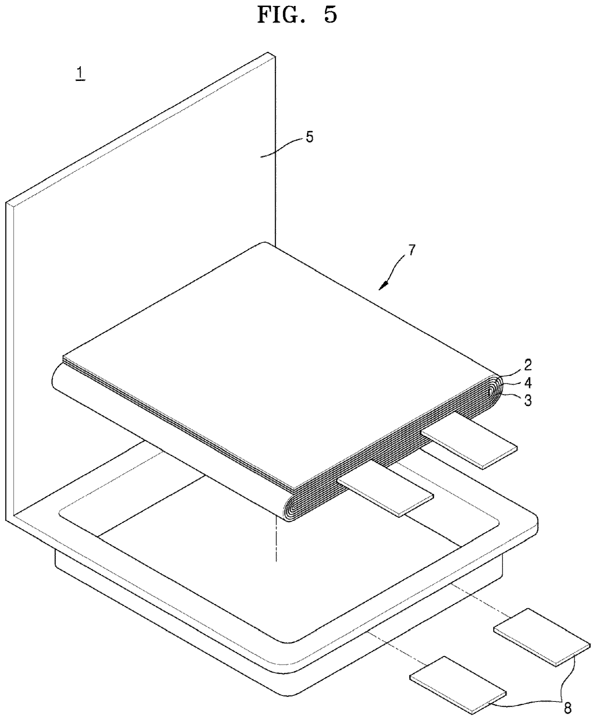

FIGS. 5 to 7 are schematic views of lithium ion batteries according to example embodiments.

A lithium ion battery is, for example, a lithium battery including a liquid electrolyte. The lithium ion battery may include a solid-state electrolyte containing a compound represented by Formula 1.

The lithium ion battery may comprise a positive electrode; a negative electrode; and a solid electrolyte disposed between the positive electrode and the negative electrode, wherein the positive electrode, the negative electrode, the solid electrolyte, or a combination thereof, comprises the solid-state electrolyte comprising the compound represented by Formula 1. In an aspect, the positive electrode comprises the solid-state electrolyte comprising the compound represented by Formula 1 and comprising a crystalline phase.

The lithium ion battery may include, for example, a positive electrode including a positive electrode active material; a negative electrode including a negative electrode active material; and a liquid electrolyte disposed between the positive electrode and the negative electrode, wherein the positive electrode, the negative electrode, or both, may include the solid-state electrolyte including a compound represented by Formula 1. The lithium ion battery may include, for example, a positive electrode including a positive electrode active material; a negative electrode including a negative electrode active material; and a liquid electrolyte disposed between the positive electrode and the negative electrode, and a protective layer comprising the solid-state electrolyte containing a compound represented by Formula 1 on a surface of the positive electrode, a surface of the negative electrode, or both. The lithium ion battery may include, for example, a positive electrode active material layer, and the positive electrode active material layer may include: a composite positive electrode active material including a core including a positive electrode active material and a first coating layer disposed on the core, wherein the first coating layer may include the solid-state electrolyte containing a compound represented by Formula 1. The lithium ion battery may include, for example, a negative electrode active material layer, the negative electrode active material layer may include: a composite negative electrode active material including a core including a positive electrode active material and a second coating layer disposed on the core, wherein the second coating layer may include the solid-state electrolyte containing a compound represented by Formula 1.

The lithium ion battery may be manufactured as follows, for example.

First, the positive electrode comprising a positive electrode active material composition is prepared. The positive electrode active material composition is prepared by mixing a positive electrode active material, a conductive material, a binder, and a solvent. The positive electrode active material composition may be directly coated and dried on a positive electrode current collector to prepare a positive electrode, or the positive electrode active material composition may be cast on a separate support, and a film obtained by peeling from the support may then be laminated on a positive electrode current collector to prepare the positive electrode. Alternatively, the positive electrode active material composition may be prepared in the form of an electrode ink containing an excessive amount of solvent and printed on a support using an inkjet or gravure printing method to manufacture the positive electrode. The printing method is not limited to the above method, and any suitable method that can be used for general coating and printing can be used.

The solid-state electrolyte containing the compound represented by Formula 1 may be coated on a surface of the positive electrode active material layer included in the positive electrode to form a positive electrode protective layer. Alternatively, solid-state electrolyte particles containing the compound represented by Formula 1 may be added to a positive electrode active material layer composition to be included in the positive electrode active material layer.

The positive electrode current collector includes a metal substrate. As the metal substrates, a plate or foil made of, for example, aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof, may be used. The positive electrode current collector may be omitted. The positive electrode current collector may further include a carbon layer disposed on one or both sides of the metal substrate. By additionally placing a carbon layer on the metal substrate, the metal of the metal substrate can be prevented from being corroded by the solid-state electrolyte contained in the positive electrode layer, and the interfacial resistance between the positive electrode active material layer and the positive electrode current collector can be reduced. The thickness of the carbon layer may be, for example, 0.1 to 5 $\mu$m, 0.1 to 3 $\mu$m, or 0.1 to 1 $\mu$m. If the thickness of the carbon layer is too thin, it may be difficult to completely block contact between the metal substrate and the solid-state electrolyte. If the thickness of the carbon layer is too thick, the energy density of an all-solid-state secondary battery may decrease. The carbon layer may include amorphous carbon, crystalline carbon, etc.

The positive electrode active material can comprise any suitable positive electrode active material as long as it is commonly used in lithium batteries. The positive electrode active material may be, for example, lithium transition metal oxide, transition metal sulfide, etc. For example, one or more of composite oxides of lithium and a metal of cobalt, manganese, nickel, or a combination thereof, may be used, and specific examples of the positive electrode active material may include a compound represented by one of following formulas: $Li_aA_{1-b}B'_bD'_2$ (where $0.90 \leq a \leq 1.8$ and $0 \leq b \leq 0.5$); $Li_aE_{1-b}B'_bO_{2-c}D'_c$ (where $0.90 \leq a \leq 1.8$, $0 \leq b \leq 0.5$, and $0 \leq c \leq 0.05$); $LiE_{2-b}B'_bO_{4-c}D'_c$ (where $0 \leq b \leq 0.5$ and $0 \leq c \leq 0.05$); $Li_aNi_{1-b-c}Co_bB'_cD'_a$ (where $0.90 \leq a \leq 1.8$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (where $0.90 \leq a \leq 1.8$, $0 \leq b \leq 0.5$, $0 \leq c \leq 0.05$, $0 < \alpha < 2$); $Li_aNi_{1-b-c}Co_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $QO_2$; $QS_2$; $LiQS_2$; $V_2O_5$; $LiV_2O_2$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In the above formulas, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. For example, the compound may be $LiCoO_2$, $LiMn_xO_{2x}$ (x=1, 2), $LiNi_{1-x}Mn_xO_{2x}$ ($0<x<1$), $Ni_{1-x-y}Co_xMn_yO_2$ ($0 \leq x \leq 0.5$, $0 \leq y \leq 0.5$), $LiFePO_4$, $TiS_2$, $FeS_2$, $TiS_3$, $FeS_3$, etc. For example, a compound represented by Formula 1 may be coated on a surface of the positive electrode active material to suppress side reactions between the positive electrode active material and the electrolyte.

The conductive material may include, for example, carbon black, carbon fiber, graphite, or a combination thereof. The carbon black may be, for example, acetylene black, Ketjen black, Super P carbon, channel black, furnace black, lamp black, thermal black, or a combination thereof. The graphite may be natural graphite or artificial graphite. Combinations including at least one of the foregoing may be used. The positive electrode may additionally include an additional conductive material other than the carbonaceous conductive material described above. Additional conductive materials may include electrically conductive fibers such as metal fibers; fluorinated carbon powder; metal powder such as aluminum powder, or nickel powder; conductive whisker such as zinc oxide or potassium titanate; or a polyethylene derivative. Combinations including at least one of the above-described conductive materials may be used. A content of the conductive material may be about 1 to about 10 parts by weight, or about 2 to about 7 parts by weight, based on 100 parts by weight of the positive electrode active material. When the amount of the conductive material is within this range, for example, about 1 part by weight to about 10 parts by weight, the electrical conductivity of the positive electrode may be adequate.

The binder can improve the adhesion between components of the positive electrode and the adhesion to the current collector of the positive electrode. Examples of the binder may include polyacrylic acid (PAA), polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene-butadiene-rubber, fluorinated rubber, copolymers thereof, or combinations thereof. A content of the binder may be about 1 to about 10 parts by weight, or about 2 to about 7 parts by weight, based on 100 parts by weight of the positive electrode active material. By the binder content being within this range, the adhesion of the positive electrode active material layer to the positive electrode current collector is further improved, and a decrease in energy density of the positive electrode active material layer can be suppressed.

As the solvent, N-methylpyrrolidone, acetone, water, etc. may be used. Contents of the positive electrode active material, the conductive material, the binder, and the solvent are at levels commonly used in lithium batteries.

A plasticizer may be added to the positive electrode active material composition to form pores inside the positive electrode active material layer.

Next, the negative electrode comprising a negative electrode active material composition is manufactured. The negative electrode active material composition is prepared by mixing a negative electrode active material, a conductive material, a binder, and a solvent. The negative electrode active material composition may be directly coated and dried on a copper current collector to prepare a negative electrode, or the negative electrode active material composition may be cast on a separate support, and a film obtained by peeling from the support may then be laminated on a copper current collector to prepare a negative electrode. Alternatively, the negative electrode active material composition may be prepared in the form of an electrode ink containing an excessive amount of solvent and printed on a support using an inkjet or gravure printing method to manufacture a negative electrode. The printing method is not limited to the above method, and any suitable method that can be used for general coating and printing can be used.

The negative electrode active material may include, for example, lithium metal, a lithium metal alloy, metal alloyable with lithium, transition metal oxide, non-transition metal oxide, carbon-based (i.e., carbon-containing) material, or a combination thereof. The lithium metal alloy is an alloy of lithium and other metals such as indium. The metal alloyable with lithium may include, for example, Si, Sn, Al, Ge, Pb, Bi, Sb Si-Y' alloy (Y' is an alkali metal, alkaline earth metal, Group 13 element, Group 14 element, Group 15 element, Group 16 element, transition metal, rare earth element, or a combination element thereof, but not Si), a Sn-Y' alloy (where Y' is an alkali metal, an alkaline earth metal, a Group 13 element, a Group 14 element, Group 15 element, Group 16 element, a transition metal, a rare earth element, or a combination thereof, but not Sn), etc. The element Y' may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The transition metal oxide may be, for example, lithium titanium oxide, vanadium oxide, lithium vanadium oxide, etc. The non-transition metal oxide may be, for example, $SnO_2$, $SiO_x$ ($0<x<2$), etc. The carbon-based material may be, for example, crystalline carbon, amorphous carbon, or mixtures thereof. The crystalline carbon may be graphite such as non-shaped, plate-shaped, flake, spherical or fibrous natural graphite or artificial graphite, and the amorphous carbon may be soft carbon (low-temperature sintered carbon) or hard carbon, mesophase pitch carbide, calcined coke, etc. The negative electrode active material may be, for example, lithium metal, a lithium metal alloy, or a combination thereof.

The conductive material, the binder, and the solvent used in the preparation of the negative electrode may be selected from materials used in the preparation of the positive electrode plate. Contents of the negative electrode active material, the conductive material, the binder, and the solvent are levels commonly used in lithium batteries.

The plasticizer may be added to the negative electrode active material composition to form pores inside the negative electrode active material layer.

The protective layer including the solid-state electrolyte containing the compound represented by Formula 1 may be disposed on a surface of the negative electrode active material layer. Alternatively, the negative electrode active material may include: negative electrode active material particles including a core including: a lithium metal, lithium metal alloy, or a combination thereof and a first coating layer disposed on the core, wherein the first coating layer may include the solid-state electrolyte containing the compound represented by Formula 1. By placing such a protective layer and/or coating layer on the negative electrode, the lithium ion conductivity and/or stability of the negative electrode to lithium metal may be improved. Alternatively, solid-state electrolyte particles containing the compound represented by Formula 1 may be added to the composition for forming the negative electrode active material layer and may be included in the negative electrode active material layer.

Next, a separator is prepared.

The positive electrode and the negative electrode may be separated by the separator, and any suitable separator commonly used in lithium batteries may be used. A separator having low resistance to ion movement in the electrolyte and excellent electrolyte moisturizing ability is suitable. The separator is, for example, a material selected from glass fiber, polyester, Teflon, polyethylene, polypropylene, polytetrafluoroethylene (PTFE), or a combination thereof, and may be in the form of non-woven or woven fabric. More specifically, in lithium ion batteries, a rollable separator such as polyethylene or polypropylene may be used, and in lithium ion polymer batteries, a separator having excellent organic electrolyte impregnation ability can be used.

The separator can be manufactured according to the following method. After the separator composition is prepared by mixing a polymer resin, a filler, and a solvent, the separator composition may be directly coated and dried on an electrode to prepare a separator film, or the separator composition may be cast and dried on a support, and a separator film peeled from the support may then be laminated on an electrode to prepare a separator. The polymer resin is not particularly limited, and any suitable material used as a binder for an electrode plate can be used. For example, vinylidene fluoride/hexafluoropropylene copolymer, polyvinylidene fluoride, polyacrylonitrile, polymethylmethacrylate, or mixtures thereof may be used. A vinylidene fluoride/hexafluoropropylene copolymer having a hexafluoropropylene content of about 8 to about 25% by weight may be suitably used.

The separator may further include the solid-state electrolyte containing the compound represented by Formula 1. For example, a coating layer including the solid-state electrolyte containing the compound represented by Formula 1 may be added on at least one surface of the separator. By additionally including the coating layer, the heat resistance and dimensional stability of the separator can be further improved. The separator may be, for example, a porous substrate; and a coating layer disposed on one or both sides of the porous substrate, wherein the coating layer may include the solid-state electrolyte containing the compound represented by Formula 1.

Next, the liquid electrolyte is prepared.

The liquid electrolyte is an organic electrolyte solution including an organic solvent. The organic electrolyte solution may be prepared by dissolving a lithium salt in an organic solvent. The organic solvent may be any suitable organic solvent that can be used in the art. For example, the organic solvent may be propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N, N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or mixtures thereof. As the lithium salt, any suitable lithium salt that can be used in the related art may be used. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y are different from each other and are independently an integer of 1 to 20), LiCl, Lil, or mixtures thereof. A content of lithium salt may be about 0.1 molar (M) to about 10 M or about 0.1 M to about 5 M, but is not necessarily limited to these and may be appropriately changed within the range of providing improved battery performance. The liquid electrolyte may further contain a flame retardant, such as a phosphorusbased (i.e., phosphorus-containing) flame retardant or a halogen-based (i.e., halogencontaining) flame retardant.

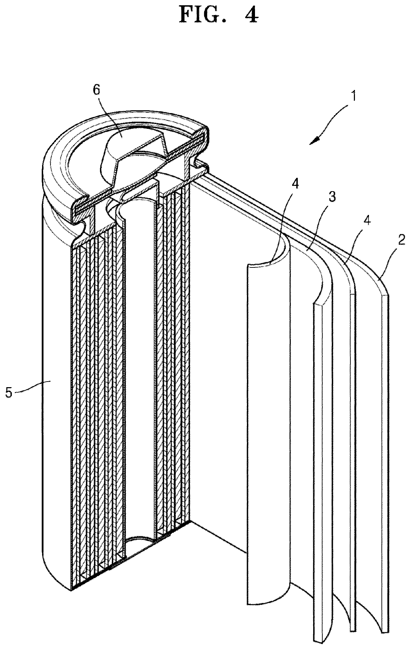

Referring to FIG. 4, a lithium ion battery 1 according to an embodiment includes a positive electrode 3, a negative electrode 2, and a separator 4. The positive electrode and/or negative electrode includes the solid-state electrolyte according to an embodiment. A battery structure is formed by winding or folding the positive electrode 3, the negative electrode 2, and the separator 4. The formed battery structure is accommodated in a battery case 5. A composition for forming the positive electrolyte is injected into the battery case 5, cross-linked, and sealed with a cap assembly 6 to complete a lithium ion battery 1. The battery case 5 may be cylindrical, but not necessarily limited thereto, and the shape thereof is, for example, a prismatic shape, a thin film (e.g., film) shape, etc.

Referring to FIG. 5, a lithium ion battery 1 according to an embodiment includes a positive electrode 3, a negative electrode 2, and a separator 4. The positive electrode and/or negative electrode includes the solid-state electrolyte according to an embodiment. The separator 4 is disposed between the positive electrode 3 and the negative electrode 2, and a battery structure 7 is formed by winding or folding the positive electrode 3, the negative electrode 2, and the separator 4. The formed battery structure 7 is accommodated in a battery case 5. An electrode tab 8 serving as an electrical passage for guiding the current formed in the battery structure 7 to the outside may be included. A composition for forming the positive electrolyte is injected into the battery case 5, cross-linked, and sealed to complete the lithium metal battery 1. The battery case 5 may be prismatic, but not necessarily limited thereto, and the shape thereof may be, for example, a cylindrical shape, a thin film shape, etc.

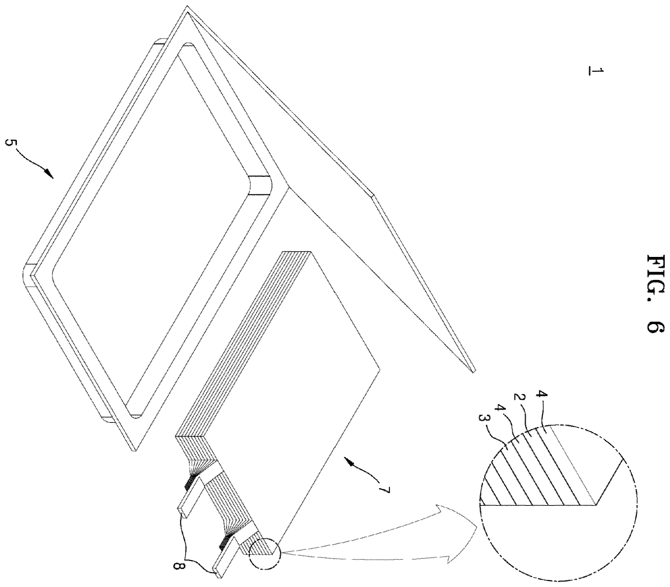

Referring to FIG. 6, a lithium ion battery 1 according to an embodiment includes a positive electrode 3, the negative electrode 2, and a separator 4. The separator 4 is disposed between the positive electrode 3 and the negative electrode 2 to form a battery structure 7. The battery structure 7 is stacked in a bi-cell structure and then accommodated in the battery case 5. An electrode tab 8 serving as an electrical passage for guiding the current formed in the battery structure 7 to the outside may be included. A liquid electrolyte is injected into the battery case 5, and sealed to complete a lithium ion battery 1. The battery case 5 is prismatic, but not necessarily limited thereto, and the shape thereof is, for example, a cylindrical shape, a thin film shape, etc.

A pouch-type (e.g., pouch) lithium ion battery uses a pouch as a case for the lithium ion battery shown in FIGS. 4 to 6. The pouch-type lithium ion battery may include at least one battery structure. The battery structure is formed by placing a separator between a positive electrode and a negative electrode. A plurality of battery structures may be stacked in the thickness direction, then impregnated with an organic electrolyte, and accommodated and sealed in a pouch to complete the pouch-type lithium ion battery. For example, although not shown in the drawing, the above-described positive electrode, negative electrode, and separator may be simply stacked and accommodated in a pouch in the form of an electrode assembly, or may be rolled or folded into a jelly roll-shaped electrode assembly and then accommodated in a pouch. Next, the liquid electrolyte is injected into the pouch, and sealed to complete the lithium ion battery.

The lithium ion battery has improved discharge capacity and lifespan characteristics and has high energy density, and thus can be used in electric vehicles (EV), for example. For example, the lithium ion battery is used in hybrid vehicles such as plug-in hybrid electric vehicles (PHEV). In addition, the lithium ion battery is used in areas that require large amounts of power storage. For example, the lithium ion battery is used in electric bicycles, electrically driven tools, etc.

A plurality of lithium ion batteries are stacked to form a battery module, and the plurality of battery modules form a battery pack. The battery pack can be used in all devices that require high capacity and high output. For example, the lithium ion battery can be used in laptops, smartphones, electric vehicles, etc. The battery module includes, for example, a plurality of batteries and a frame that holds the batteries. The battery pack includes, for example, a plurality of battery modules and a bus bar connecting the battery modules. The battery module and/or battery pack may further include a cooling device. A plurality of battery packs are controlled by a battery management system. The battery management system includes a battery pack and a battery control device connected to the battery pack.

(All-Solid-State Battery)

An all-solid-state battery is, for example, a battery including a solid-state electrolyte. The all-solid-state battery may include the solid-state electrolyte represented by Formula 1.

The all-solid-state battery may include: a positive electrode including a positive electrode active material; a negative electrode including a negative electrode active material; and a solid-state electrolyte layer disposed between the positive electrode and the negative electrode, and the positive electrode, the negative electrode, the solid-state electrolyte layer, or a combination thereof, may include the solid-state electrolyte containing the compound represented by Formula 1. The all-solid-state battery may include, for example, a positive electrode active material layer, and the positive active material layer may include the solid-state electrolyte containing the compound represented by Formula 1. The all-solid-state battery may include, for example, a negative electrode active material layer, and the negative electrode active material layer may include the solid-state electrolyte containing the compound represented by Formula 1. The all-solid-state battery may include a solid-state electrolyte layer disposed between the positive electrode and the negative electrode, and the solid-state electrolyte layer may include the solid-state electrolyte containing the compound represented by Formula 1. The all-solid-state battery may include, for example, a positive electrode active material layer, and the positive electrode active material layer may include: a composite positive electrode active material including a core including a positive electrode active material and a first coating layer disposed on the core, wherein the first coating layer may include a solid-state electrolyte represented by Formula 1. The all-solid-state battery may include, for example, a negative electrode active material layer, and the negative electrode active material layer may include: a composite negative electrode active material including a core including a positive electrode active material and a second coating layer disposed on the core, wherein the second coating layer may include the solid-state electrolyte represented by Formula 1.

(Type 1: All-solid-state battery employing non-precipitation-type negative electrode)

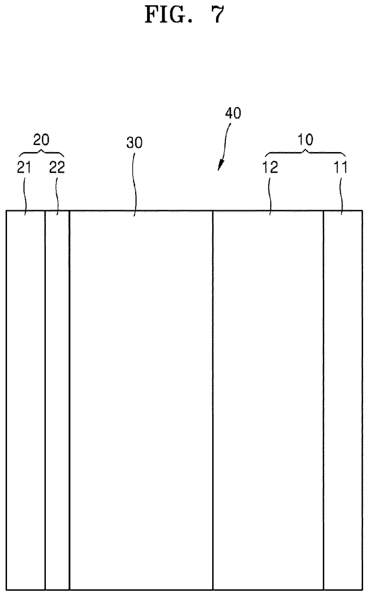

FIG. 7 is a schematic view of an all-solid-state battery including a non-precipitation-type negative electrode, according to an embodiment. In the all-solid-state battery including the non-precipitation-type negative electrode, during initial charging, the initial charge capacity of a negative electrode active material layer is, for example, greater than about 50%, greater than about 60%, greater than about 70%, greater than about 80%, greater than about 90%, or greater than about 100% of the initial charge capacity of a positive electrode active material layer.

The all-solid-state lithium battery may be manufactured as follows.

First, a solid-state electrolyte layer is prepared. The solid-state electrolyte layer includes a solid-state electrolyte. The solid-state electrolyte layer may be manufactured, for example, by mixing the solid-state electrolyte containing the compound represented by Formula 1 and a binder and then drying, or by pressing the solid-state electrolyte powder containing the compound represented by Formula 1 into a certain shape. The solid-state electrolyte layer may be manufactured, for example, by mixing the solid-state electrolyte containing the compound represented by Formula 1, a sulfide-based (e.g., sulfide-containing) and/or oxide-based (e.g., oxide-containing) solid-state electrolyte, and a binder, and then drying, or by pressing the solid-state electrolyte powder containing the compound represented by Formula 1 and the sulfide-based and/or oxide-based solid-state electrolyte powder into a certain shape. The solid-state electrolyte layer may be manufactured, for example, by mixing the sulfide-based and/or oxide-based solid-state electrolyte, and a binder, and then drying, or by pressing the sulfide-based and/or oxide-based solid-state electrolyte powder into a certain shape.

The solid-state electrolyte may be deposited using, for example, a film formation method such as blasting, aerosol deposition, cold spraying, sputtering, chemical vapor deposition (CVD), or spraying, thereby preparing a solid-state electrolyte layer. In addition, the solid-state electrolyte layer may be formed by pressing a solid-state electrolyte.

In addition, the solid-state electrolyte layer may be formed by mixing and pressing a solid-state electrolyte, a solvent, and a binder or support. In this case, the solvent or support is added to reinforce the strength of the solid-state electrolyte layer or to prevent short-circuiting of the solid-state electrolyte.

The binder included in the solid-state electrolyte layer is, for example, styrene butadiene rubber (SBR), polytetrafluoroethylene, polyvinylidene fluoride, polyethylene, and polyvinyl alcohol, but is not limited thereto, and any suitable binder used in the related art may be used. The binder of the solid-state electrolyte layer may be the same as or different from the binders of the positive electrode layer and the negative electrode layer.

The oxide-based solid-state electrolyte is, for example, $Li_{1+x+y}Al_xTi_{2-x}Si_yP_{3-y}O_{12}$ (0<x<2 and 0≤y<3), $BaTiO_3$, $Pb(Zr,Ti)O_3(PZT)$, $Pb_{1-x}La_xZr1_{-y}$ $Ti_yO_3(PLZT)$ (0≤x<1 and 0≤y<1), $Pb(Mg_{1/3}Nb_{2/3})O_3$-$PbTiO_3(PMN$-$PT)$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1), $Li_xLa_yTiO_3$ (0<x<2 and 0<y<3), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M = Te, Nb, or Zr, and x is an integer of 1 to 10), or a combination thereof. The solid-state electrolyte is prepared by sintering, etc. The oxide-based solid-state electrolyte is, for example, a garnet-type solid-state electrolyte of $Li_7La_3Zr_2O_{12}$ (LLZO) or $Li_{3+x}La_3Zr_{2-a}M_aO_{12}$ (M doped LLZO, M=Ga, W, Nb, Ta, or Al, and x is 1 to 10, 0<a<2).

The sulfide-based solid-state electrolyte may include, for example, lithium sulfide, silicon sulfide, phosphorus sulfide, boron sulfide, or a combination thereof. The sulfide-based solid-state electrolyte particles may include $Li_2S$, $P_2S_5$, $SiS_2$, $GeS_2$, $B_2S_3$, or a combination thereof. The sulfide-based solid-state electrolyte particles may be $Li_2S$ or $P_2S_5$. The sulfide-based solid-state electrolyte particles are known to have higher lithium ion conductivity than other inorganic compounds. For example, the sulfide-based solid-state electrolyte includes $Li_2S$ and $P_2S_5$. When the sulfide-based solid-state electrolyte material constituting a solid-state electrolyte includes $Li_2S$-$P_2S_5$, the mixing molar ratio of $Li_2S$ to $P_2S_5$ may range from, for example, about 50:50 to about 90:10.

In addition, the sulfide-based solid-state electrolyte may include an inorganic solid-state electrolyte prepared by adding $Li_3PO_4$, halogen, a halogen compound, $Li_{2+2x}Zn_{1-x}GeO_4$ (0x1) ("LISICON"), $Li_{3+y}PO_{4-x}N_x$ (0≤x≤1, 0≤y≤1) ("LIPON"), $Li_{3.25}Ge_{0.25}P_{0.75}S_4$ ("ThioLISICON"), $Li_2O$-$Al_2O_3$-$TiO_2$-$P_2O_5$ ("LATP"), etc. to an inorganic solid-state electrolyte of $Li_2S$-$P_2S_5$, $SiS_2$, $GeS_2$, $B_2S_3$, or a combination thereof.

Non-limiting examples of a sulfide-based solid-state electrolyte material include: $Li_2S$-$P_2S_5$; $Li_2S$-$P_2S_5$-LiX (X is a halogen atom); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$ (m and n are positive numbers, and Z is Ge, Zn, or G); $Li_2S$-$GeS_2$; $Li_2S$-$SiS_2$-$Li_3PO_4$; and $Li_2S$-$SiS_2$-$Li_pMO_q$ (where p and q are positive numbers and M is P, Si, Ge, B, Al, Ga, or In). In this regard, the sulfide-based solid-state electrolyte material is prepared by treating a raw starting material of the sulfide-based solid-state electrolyte material (e.g., $Li_2S$, $P_2S_5$, etc.) by a melt quenching method, a mechanical milling method, etc. In addition, after the treatment, a calcination process may be performed.

In addition, the sulfide-based solid-state electrolyte may include, for example, sulfur (S), phosphorus (P), and lithium (Li) as at least constituent elements among the aforementioned sulfide-based solid-state electrolyte materials. For example, the sulfide-based solid-state electrolyte may be a material including $Li_2S$-$P_2S_5$. When a material including $Li_2S$-$P_2S_5$ is used as the sulfide-based solid-state electrolyte material, the mixing molar ratio of $Li_2S$ and $P_2S_5$, $Li_2S$:$P_2S_5$, is, for example, about 50:50 to about 90:10.

The sulfide-based solid-state electrolyte may be a compound having an argyrodite crystal structure. The compound having an argyrodite crystal structure includes, for example, $Li_{7-x}PS_{6-x}Cl_x$ (0<x<2), $Li_{7-x}PS_{6-x}Br_x$ (0<x<2), $Li_{7-x}PS_{6-x}I_x$ (0<x<2), or a combination thereof. In particular, the sulfide-based solid-state electrolyte included in the solid-state electrolyte may be an argyrodite-type compound including $Li_6PS_5Cl$, $Li_6PS_5Br$, LisPSsl, or a combination thereof.

Next, a positive electrode is manufactured.

The positive electrode may be manufactured by forming a positive electrode active material layer including a positive electrode active material on the positive electrode current collector. The positive electrode active material layer may be prepared by a vapor phase process, liquid phase process, or a solid phase process. The vapor phase process may be pulse laser deposition (PLD), sputtering deposition, chemical vapor deposition (CVD), etc., but is not limited thereto and any suitable process that can be used in the related art is possible. The liquid phase process or solid phase process may be a sintering process, a sol-gel process, a doctor blade process, a screen printing process, a slurry casting process, a powder pressing process, etc., but is not necessarily limited thereto and any suitable process that can be used in the related art is possible.

The positive electrode active material layer includes a positive electrode active material. The positive electrode active material and the positive electrode current collector may be selected from the materials used in the above-described lithium ion battery.

The positive electrode active material layer may additionally include a binder, a conductive material, etc. The binder and conductive material may be selected from the materials used in the above-described lithium ion battery.

The positive electrode active material layer may include the solid-state electrolyte containing a compound represented by Formula 1. A content of the solid electrolyte in the positive electrode active material layer may be about 5 to about 40 parts by weight, about 5 to about 39 parts by weight, or about 10 to about 35 parts by weight based on 100 parts by weight of a total weight of the positive electrode active material layer. A protective layer including the solid-state electrolyte containing the compound represented by Formula 1 may be disposed on the positive electrode active material layer.

Next, a negative electrode is prepared.

The negative electrode may be manufactured in the same manner as the positive electrode, except that a negative electrode active material, instead of a positive electrode active material, is used. The negative electrode may be manufactured by forming a negative electrode active material layer including a negative electrode active material on a current collector.

The negative electrode active material layer includes a negative electrode active material. The negative electrode active material may be selected from the materials used in the above-described lithium ion battery. The negative electrode active material may be, for example, lithium metal, a lithium metal alloy, or a combination thereof.

The negative electrode active material layer may additionally include a binder, a conductive material, etc. The binder and the conductive material may be selected from materials used for the above-described lithium ion battery.

The negative electrode active material layer may include the solid-state electrolyte containing a compound represented by Formula 1. A protective layer including the solid-state electrolyte containing the compound represented by Formula 1 may be disposed on the negative electrode active material layer.

Referring to FIG. 7, an all-solid-state battery 40 includes a solid-state electrolyte layer 30, a positive electrode 10 disposed on one side of the solid-state electrolyte layer 30, and a negative electrode 20 disposed on the other side of the solid-state electrolyte layer 30. The positive electrode 10 includes a positive electrode active material layer 12 in contact with the solid-state electrolyte layer 30, and a positive electrode current collector 11 in contact with the positive electrode active material layer 12. The negative electrode 20 includes a negative electrode active material layer 22 in contact with the solid-state electrolyte layer 30, and a negative electrode current collector 21 in contact with the negative electrode active material layer 22.

The all-solid-state secondary battery 40 is completed, for example, by disposing the positive electrode active material layer 12 and the negative electrode active material layer 22 on both sides of the solid-state electrolyte layer 30, and disposing the positive electrode current collector 11 and the negative electrode current collector 21 on the positive electrode active material layer 12 and the negative electrode active material layer 22, respectively. Alternatively, the all-solid-state secondary battery 40 may be completed by sequentially stacking the negative electrode active material layer 22, the solid-state electrolyte layer 30, the positive electrode active material layer 12, and the positive electrode current collector 11 on the negative electrode current collector 21.

(Type 2: All-solid-state battery employing precipitation-type negative electrode)

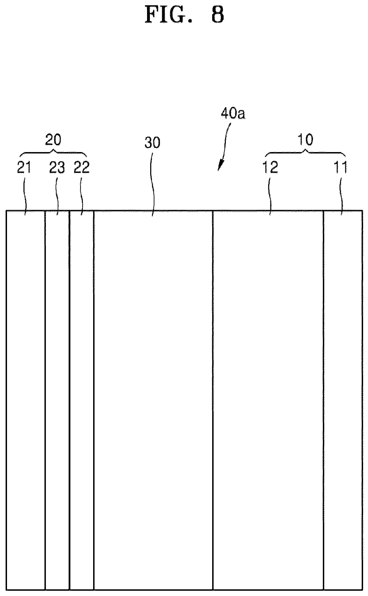

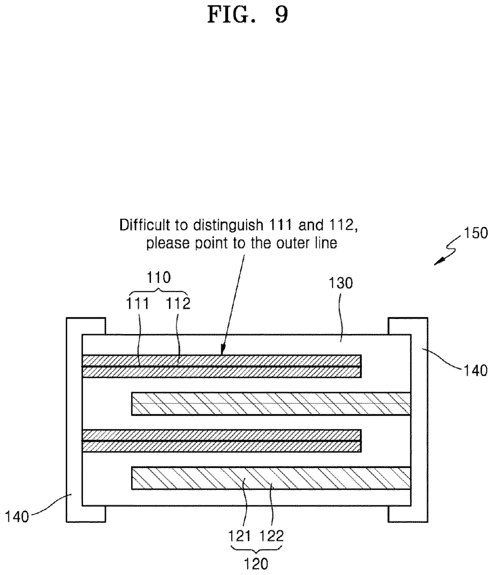

FIGS. 8 and 9 are schematic views of an all-solid-state battery including a precipitation-type negative electrode, according to example embodiments. In the all-solid-state battery including the precipitation-type negative electrode, during initial charging, the initial charge capacity of a negative electrode active material layer is, for example, about 50% or less, about 40% or less, about 30% or less, about 20% or less, about 10% or less, about 5% or less, or about 1% or less of the initial charge capacity of a positive electrode active material layer. For example, the all-solid-state secondary battery 40 includes: a positive electrode layer 10 including a positive electrode active material layer 12 disposed on a positive electrode current collector 11; a negative electrode layer 20 including a negative electrode active material layer 22 disposed on a negative electrode current collector 21; and an electrolyte layer 30 disposed between the positive electrode layer 10 and the negative electrode layer 20, wherein the positive electrode active material layer 12 and/or the electrolyte layer 30 include a solid-state electrolyte.

An all-solid-state battery according to another embodiment may be prepared as follows.

The positive electrode and the solid-state electrolyte layer are manufactured in the same manner as the all-solid-state secondary battery having the above-described non-precipitation type negative electrode.

Next, a negative electrode is prepared.

Referring to FIGS. 8 and 9, the negative electrode 20 includes a negative electrode current collector 21 and a negative electrode active material layer 22 disposed on the negative electrode current collector 21, and the negative electrode active material layer 22 includes, for example, a negative electrode active material and a binder.

The negative electrode active material included in the negative electrode active material layer 22 is, for example, in the form of a particle. An average particle diameter of the negative electrode active material in the form of the particle is, for example, about 4 micrometers ($\mu$m) or less, about 3 $\mu$m or less, about 2 $\mu$m or less, about 1 $\mu$m or less, or about 900 nanometers (nm) or less. The average particle diameter of the negative electrode active material in the form of the particle is, for example, about 10 nm to about 4 $\mu$m, about 50 nm to about 3 $\mu$m, about 70 nm to about 2 $\mu$m, about 100 nm to about 1 $\mu$m, or about 200 nm to about 900 nm. By including the negative electrode active material having an average particle size in this range, lithium can be more easily reversibly absorbed and/or desorbed during charging and discharging. The average particle diameter of the negative electrode active material is, for example, a median diameter (D50), measured using a laser particle size distribution meter.

The negative electrode active material included in the negative electrode active material layer 22 includes, for example, carbon-based negative electrode active materials, metal or metalloid negative electrode active materials, or a combination thereof.

Specifically, the carbon-based negative electrode active material is an amorphous carbon. The amorphous carbon is, for example, carbon black (CB), acetylene black (AB), furnace black (FB), ketjen black (KB), graphene, etc., but is not necessarily limited thereto, and any suitable carbon that is classified as amorphous carbon in the related art is possible. The amorphous carbon is carbon that does not have crystallinity or has very low crystallinity and is distinguished from crystalline carbon or graphitic carbon.

The metal or metalloid negative electrode active material include gold (Au), platinum (Pt), palladium (Pd), silicon (Si), silver (Ag), aluminum (Al), bismuth (Bi), tin (Sn), zinc (Zn), or a combination thereof, but is not necessarily limited thereto, and any suitable metal negative active material or metalloid negative electrode active material that forms an alloy or compound with lithium in the related art can be used. For example, nickel (Ni) does not form an alloy with lithium, and thus is not a metal negative electrode active material.

The negative electrode active material layer 22 includes one among these negative electrode active materials, or a mixture of a plurality of different negative electrode active materials. For example, the negative electrode active material layer 22 includes only amorphous carbon, or gold (Au), platinum (Pt), palladium (Pd), silicon (Si), silver (Ag), aluminum (Al), bismuth (Bi), tin (Sn), zinc (Zn), or a combination thereof. Alternatively, the negative electrode active material layer 22 includes a mixture of amorphous carbon and gold (Au), platinum (Pt), palladium (Pd), silicon (Si), silver (Ag), aluminum (Al), bismuth (Bi), tin (Sn), zinc (Zn), or a combination thereof. The mixing ratio of amorphous carbon and gold of the mixture is, for example, by weight, about 10:1 to about 1:2, about 5:1 to about 1:1, or about 4:1 to about 2:1, but is not necessarily limited to these ranges and may vary depending on the required characteristics of the all-solid-state battery 40. By including the negative electrode active material having this composition, the cycle characteristics of the all-solid-state battery 40 are further improved.

The negative electrode active material included in the negative electrode active material layer 22 includes, for example, a mixture of a first particle comprising amorphous carbon and a second particle comprising metal or metalloid. The metal or metalloid includes, for example, gold (Au), platinum (Pt), palladium (Pd), silicon (Si), silver (Ag), aluminum (Al), bismuth (Bi), tin (Sn), zinc (Zn), etc. Alternatively, the metalloid is a semiconductor. A content of the second particle is about 8-60 wt%, about 10-50 wt%, about 15-40 wt%, or about 20-30 wt% based on a total weight of the mixture. By including the second particle having a content in this range, the cycle characteristics of the all-solid-state battery 40, for example, are further improved.

The binder included in the negative electrode active material layer 22 is, for example, styrene-butadiene rubber (SBR), polytetrafluoroethylene, polyvinylidene fluoride, polyethylene, vinylidene fluoride/ hexafluoropropylene copolymer, polyacrylonitrile, polymethyl methacrylate, etc., but is not necessarily limited thereto, and any suitable binder used in the related art can be used. The binder may be composed of a single binder or multiple different binders.

By including the binder, the negative electrode active material layer 22 is stabilized on the negative electrode current collector 21. In addition, during charging and discharging, despite changes in the volume and/or relative position of the negative electrode active material layer 22, cracks in the negative electrode active material layer 22 are suppressed. For example, when the negative electrode active material layer 22 does not include the binder, the negative electrode active material layer 22 can be easily separated from the negative electrode current collector 21. Due to the separation of the negative electrode active material layer 22 from the negative electrode current collector 21, the negative electrode current collector 21 comes into contact with the solid-state electrolyte layer 30 at a portion where the negative electrode current collector 21 is exposed, and thus the possibility of a short circuit increases. The negative electrode active material layer 22 is manufactured, for example, by applying a slurry in which the material constituting the negative electrode active material layer 22 is dispersed onto the negative electrode current collector 21, and drying the slurry applied negative electrode current collector 21. By including a binder in the negative electrode active material layer 22, stable dispersion of the negative electrode active material in the slurry is possible. For example, when the slurry is applied onto the negative electrode current collector 21 by screen printing, clogging of a screen (e.g., clogging by aggregates of the negative electrode active material) can be suppressed.

The negative electrode active material layer 22 may further include additives used in the conventional all-solid-state battery, for example, fillers, coating agents, dispersants, and ion conductive auxiliaries.

A thickness of the negative electrode active material layer 22 is, for example, about 50% or less, about 40% or less, about 30% or less, about 20% or less, about 10% or less, or about 5% or less of the thickness of the positive electrode active material layer 12. The thickness of the negative electrode active material layer 22 is, for example, about 1 μm to about 20 μm, about 2 μm to about 10 μm, or about 3 μm to about 7 μm. If the thickness of the negative electrode active material layer 22 is too thin, lithium dendrites formed between the negative electrode active material layer 22 and the negative electrode current collector 21 will collapse the negative electrode active material layer 22, making it difficult to improve the cycle characteristics of the all-solid-state battery 40. If the thickness of the negative electrode active material layer 22 is excessively increased, the energy density of the all-solid-state battery 40 is reduced and the internal resistance of the all-solid-state battery 40 is increased by the negative electrode active material layer 22, making it difficult to improve the cycle characteristics of the all-solid-state battery 40.

If the thickness of the negative electrode active material layer 22 is reduced, for example, a charge capacity of the negative electrode active material layer 22 is also reduced. The charge capacity of the negative electrode active material layer 22 is, for example, about 50% or less, about 40% or less, about 30% or less, about 20% or less, about 10% or less, about 5% or less, about 2% or less, or about 1% or less, compared to a charge capacity of the positive electrode active material layer 12. The charge capacity of the negative electrode active material layer 22 is, for example, about 0.1% to about 50%, about 0.1% to 40%, about 0.1% to 30%, about 0.1% to about 20%, about 0.1% to about 10%, about 0.1% to about 5%, or about 0.1% to about 2%, compared to the charge capacity of the positive electrode active material layer 12. If the charge capacity of the negative electrode active material layer 22 is too small, because of the negative electrode active material layer 22 being very thin, lithium dendrites formed between the negative electrode active material layer 22 and the negative electrode current collector 21 during repeated charging and discharging processes collapse the negative electrode active material layer 22, making it difficult to improve the cycle characteristics of the all-solid-state battery 40. If the charge capacity of the negative electrode active material layer 22 is excessively increased, the energy density of the all-solid-state battery 40 is reduced and the internal resistance of the all-solid-state battery 40 is increased by the negative electrode active material layer 22, making it difficult to improve the cycle characteristics of the all-solid-state battery 40.

The charge capacity of the positive electrode active material layer 12 is obtained by multiplying the specific charge capacity (mAh/g) of the positive electrode active material by the mass of the positive electrode active material in the positive electrode active material layer 12. When multiple types of positive electrode active materials are used, the multiplication values of charge capacity density and mass are calculated for the respective positive electrode active materials, and the sum of these values is the charge capacity of the positive electrode active material layer 12. The charge capacity of the negative electrode active material layer 22 is also calculated in the same way. That is, the charge capacity of the negative electrode active material layer 22 is obtained by multiplying the specific charge capacity (mAh/g) of the negative electrode active material by the mass of the negative electrode active material in the negative electrode active material layer 22. When multiple types of negative electrode active materials are used, the multiplication values of charge capacity density and mass are calculated for the respective negative electrode active materials, and the sum of these values is the charge capacity of the negative electrode active material layer 12. Here, the charge capacity densities of the positive electrode active material and the negative electrode active material are the capacities estimated using an all-solid half-cell employing lithium metal as a counter electrode. By measuring the charge capacity using an all-solid half-cell, the charge capacities of the positive electrode active material layer 12 and the negative electrode active material layer 22 are directly measured. By dividing the measured charge capacity by the mass of each active material, the specific charge capacity is obtained. Alternatively, the charge capacities of the positive electrode active material layer 12 and the negative electrode active material layer 22 may be the initial charge capacities measured during a first charging cycle.

Referring to FIG. 9, an all-solid-state battery 40a may further include, for example, a metal layer 23 disposed between the negative electrode current collector 21 and the negative electrode active material layer 22. The metal layer 23 may be a metal foil or a plated metal layer. The metal layer 23 includes lithium or a lithium alloy. Accordingly, the metal layer 23 acts as a lithium reservoir, for example. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, etc., but is not limited thereto, and any suitable lithium alloy used in the related art is possible. The metal layer 23 may be made of one of these alloys or lithium, or may be made of several types of alloys.

A thickness of the metal layer 23 is not particularly limited, but is, for example, about 1 $\mu$m to about 200 $\mu$m, about 1 $\mu$m to about 100 $\mu$m, about 1 $\mu$m to about 70 $\mu$m, about 1 $\mu$m to about 50 $\mu$m, about 1 $\mu$m to about 30 $\mu$m, or about 1 $\mu$m to about 20 $\mu$m. If the thickness of the metal layer 23 is too thin, it is difficult for the metal layer 23 to function as a lithium reservoir. If the thickness of the metal layer 23 is too thick, the mass and volume of the all-solid-state battery 40a may increase and cycle characteristics may deteriorate. The metal layer 23 may be, for example, a metal foil having a thickness in this range.

In the all-solid-state battery 40a, the metal layer 23 may be placed between the negative electrode current collector 21 and the negative electrode active material layer 22, for example, before assembling the all-solid-state battery 40a, or may be precipitated between the negative electrode current collector 21 and the negative electrode active material layer 22 by charging after assembling the all-solid-state battery 40a. When the metal layer 23 is placed between the negative electrode current collector 21 and the negative electrode active material layer 22 before assembling the all-solid-state battery 40a, the metal layer 23 is a lithium-containing metal layer, and thus acts as a lithium reservoir. For example, before assembling the all-solid-state battery 40a, a lithium foil is placed between the negative electrode current collector 21 and the negative electrode active material layer 22. Accordingly, the cycle characteristics of the all-solid-state battery 40a including the metal layer 23 are further improved. When the metal layer 23 is precipitated by charging after assembling the all-solid-state battery 40a, the metal layer 23 is not included, when assembling the all-solid-state battery 40a, and thus the energy density of the all-solid-state battery 40a increases. For example, when charging the all-solid-state battery 40a, the all-solid-state battery 40a is charged in excess of the charge capacity of the negative electrode active material layer 22. That is, the negative electrode active material layer 22 is overcharged. At an early stage of charging, lithium is absorbed into the negative electrode active material layer 22. The negative electrode active material included in the negative electrode active material layer 22 forms an alloy or compound with lithium ions that have migrated from the positive electrode layer 10. When the negative electrode active material layer 22 is charged in excess of the charge capacity thereof, lithium is precipitated, for example, on the rear surface of the negative electrode active material layer 22, that is, between the negative electrode current collector 21 and the negative electrode active material layer 22, and due to the precipitated lithium, a metal layer corresponding to the metal layer 23 is formed. The metal layer 23 is a metal layer mainly composed of lithium (i.e., metallic lithium). These results are obtained, for example, by forming the negative electrode active material included in the negative electrode active material layer 22 using a material that forms an alloy or compound with lithium. During discharging, the negative electrode active material layer 22 and the metal layer 23, that is, lithium in the metal layer, are ionized and move toward the positive electrode layer 10. Therefore, it is possible to use lithium as a negative electrode active material in the all-solid-state battery 40a. In addition, since the negative electrode active material layer 22 covers the metal layer 23, it serves as a protective layer for the metal layer 23, that is, and at the same time plays a role in suppressing the precipitation growth of lithium dendrites. Therefore, short-circuiting and capacity reduction of the all-solid-state battery 40a are suppressed, and as a result, the cycle characteristics of the all-solid-state battery 40a are improved. In addition, when the metal layer 23 is placed by charging after assembling the all-solid-state battery 40a, the negative electrode current collector 21, the negative electrode active material layer 22, and the area therebetween are, for example, Li-free areas at an initial state or a discharged state of the all-solid-state battery 40a.

The negative electrode current collector 21 is made of a material that does not react with lithium, that is, does not form any alloy or compound. The material constituting the negative electrode current collector 21 includes, for example, copper (Cu), stainless steel, titanium (Ti), iron (Fe), cobalt (Co), or nickel (Ni), but is not necessarily limited thereto, and any suitable material that can be used as an electrode current collector in the related art is possible. The negative electrode current collector 21 may be composed of one of the above-described metals or an alloy or coating material of two or more metals. The negative electrode current collector 21 is, for example, plate-shaped or foil-shaped.

The all-solid-state batteries 40 and 40a may further include on the negative electrode current collector 21, for example, a thin film (e.g., a film) (not shown) including an element capable of forming an alloy with lithium. The thin film is disposed between the negative electrode current collector 21 and the negative electrode active material layer 22. The thin film includes, for example, an element alloyable with lithium. The element alloyable with lithium may be, for example, gold (Au), silver (Ag), zinc (Zn), tin (Sn), indium (In), silicon (Si), aluminum (Al), bismuth (Bi), etc., but is not necessarily limited thereto, and any suitable element that can form an alloy with lithium in the related art is possible. The thin film is composed of one of these metals or an alloy of several types of metals. By the thin film being placed on the negative electrode current collector 21, the metal layer 23 precipitated, for example, between the thin film and the negative electrode active material layer 22 becomes more planarized, and the cycle characteristics of the all-solid-state battery 40, 40a can be further improved.

A thickness of the thin film is, for example, about 1 nm to about 800 nm, about 10 nm to about 700 nm, about 50 nm to about 600 nm, or about 100 nm to about 500 nm. When the thickness of the thin film is less than 1 nm, the function by the thin film is difficult to exhibit. If the thin film is too thick, the thin film itself may absorb lithium and the amount of lithium precipitated at the negative electrode may be reduced, and thus, the energy density of the all-solid-state battery is lowered and the cycle characteristics of the all-solid-state batteries 40 and 40a may deteriorate. The thin film may be placed on the negative electrode current collector 21 by, for example, vacuum deposition, sputtering, plating, etc., but not necessarily limited thereto, and any method that can form a thin film in the related art is possible.

(Multilayer Ceramic Battery)

A multilayer ceramic (MLC) battery includes, for example, a plurality of positive electrode layers; a plurality of negative electrode layers alternately disposed between the plurality of positive electrode layers; and solid-state electrolyte layers alternately disposed between the plurality of positive electrode layers and the plurality of negative electrode layers. A solid-state electrolyte contained in the MLC battery is, for example, an oxide-based solid-state electrolyte. The solid-state electrolyte may include, for example, the solid-state electrolyte containing a compound represented by Formula 1.

The MLC battery is, for example, a sintered product of a multilayer body in which a positive electrode active material precursor, a negative electrode active material precursor, and a solid-state electrolyte precursor are sequentially stacked, or a sintered product of a multilayer body in which a positive electrode active material, a negative electrode active material, and a solid-state electrolyte are sequentially stacked. The MLC battery includes, for example, a multilayer body structure in which multiple unit cells, each having a positive electrode active material layer, a solid-state electrolyte layer, and a negative electrode active material layer sequentially continuously arranged, are stacked so that the positive electrode active material layer and the negative electrode active material layer face each other. The MLC battery may further include, for example, a positive electrode current collector and/or a negative electrode current collector. When the MLC battery further includes a positive electrode current collector, the positive electrode active material layer may be disposed on both sides of the positive electrode current collector. When the MLC battery further includes a negative electrode current collector, the negative electrode active material layer may be disposed on both sides of the negative electrode current collector. By further including a positive electrode current collector and/or a negative electrode current collector, the MLC battery may have further improved high-rate characteristics. In the MLC battery, unit cells are stacked by providing a current collector layer on either or both of the uppermost and lowermost layers of the multilayer body, or by interposing a metal layer on the multilayer body. A multilayer ceramic battery or thin film battery is a small or ultra-small battery that can be applied, for example, as a power source for applications for the Internet of Things (IoT) or a power source for wearable devices. A multilayer ceramic battery or thin film battery can also be applied to medium to largesized batteries such as, for example, electric vehicles (EV) and energy storage systems (ESS).

A negative electrode active material included in the negative electrode layer in the multilayer ceramic battery includes, for example, lithium metal phosphate, lithium metal oxide, metal oxide, a carbon-based anode active material, or a combination thereof. The carbon-based anode active materials include crystalline carbon, amorphous carbon, a porous carbon or a combination thereof. Examples of crystalline carbon include natural graphite or artificial graphite.

Amorphous carbon is, for example, denka black, carbon black (CB), acetylene black (AB), furnace black (FB), ketjen black (KB), and graphene, soft carbon or hard carbon, mesophase pitch carbonization product, calcined coke, etc. The negative active material is, for example, a of $Li_{4/3}Ti_{5/3}O_4$, $LiTiO_2$, $LiM1_sM2_tO_u$ (M1 and M2 are transition metals, and s, t, and u are arbitrary positive numbers), $TiO_x$ ($0<x\leq3$), $Li_xV_2(PO_4)_3$ ($0<x\leq5$), or a combination thereof. The negative active material is specifically $Li_{4/3}Ti_{5/3}O_4$, $LiTiO_2$, etc.

The positive electrode layer included in the multilayer ceramic battery includes a positive electrode active material. The positive electrode active material may be selected from positive electrode active materials used in lithium ion batteries. The positive electrode active material includes, for example, lithium metal phosphate or lithium metal oxide. The positive electrode active material includes, for example, lithium cobalt oxide, lithium iron phosphate, lithium nickel cobalt manganese oxide, lithium nickel cobalt aluminum oxide, lithium nickel cobalt manganese aluminum oxide, or a combination thereof.

The current collector layer can be any suitable current collector layer that functions as a positive electrode current collector and/or a negative electrode current collector. The current collector layer may comprise any suitable metal, for example, Ni, Cu, Ag, Pd, Au, Pt, or a combination thereof. The current collector layer may be made of, for example, an alloy including any of Ni, Cu, Ag, Pd, Au, or Pt. The alloy may be, for example, alloys of two or more of Ni, Cu, Ag, Pd, Au, or Pt. The alloy is, for example, Ag/Pd alloy. These metals and alloys may be used alone or in a mixture of two or more types. The current collector layer as the positive electrode current collector and the current collector layer as the negative electrode current collector may use the same material or may be different from each other. Since an alloy or mixed powder including Ag and Pd can continuously and arbitrarily change the melting point from the melting point of silver (962 °C) to the melting point of palladium (1,550 °C) depending on the mixing ratio, the melting point can be adjusted to suit a batch firing temperature. In addition, by having high electronic conductivity, an increase in battery internal resistance can be suppressed.

The solid-state electrolyte is, for example, an oxide-based solid-state electrolyte. The oxide-based solid-state electrolyte may be selected from the materials used in the afore-mentioned all-solid-state batteries. The solid-state electrolyte is, for example, a lithium compound of $Li_{3.25}Al_{0.25}SiO_4$, $Li_3PO_4$, $LiP_xSi_yO_z$ (where x, y, and z are arbitrary positive numbers), or a combination thereof. The solid-state electrolyte is, for example, $Li_{3.5}P_{0.5}Si_{0.5}O_4$.

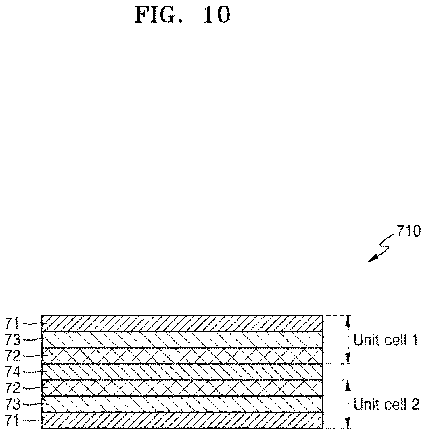

FIG. 10 is a schematic view showing the structure of a multilayer ceramic battery according to another embodiment. Referring to FIG. 10, a positive electrode active material layer 112 is disposed on both sides of a positive electrode current collector 111 to form a positive electrode 110. A negative electrode active material layer 122 is stacked on both sides of a negative electrode current collector 121 to form a negative electrode 120. A solid-state electrolyte 130 is disposed between the positive electrode 110 and the negative electrode 120. External electrodes 140 are formed on both ends of a battery body 150. The external electrodes 140 are connected to the positive electrode 110 and the negative electrode 120, the ends of which are exposed to the outside of the battery body 150, and serve as external terminals that electrically connect the positive electrode 110 and the negative electrode 120 to an external device. One of the external electrodes 140 has one end connected to the positive electrode 110 exposed to the outside of the battery body 150, and the other of the external electrodes 140 has the other end connected to the negative electrode 120 exposed to the outside of the battery body 150. The multilayer ceramic (MLC) battery 150 can be manufactured by sequentially stacking an oxide electrode and a solid-state electrolyte, followed by simultaneously heat treating.

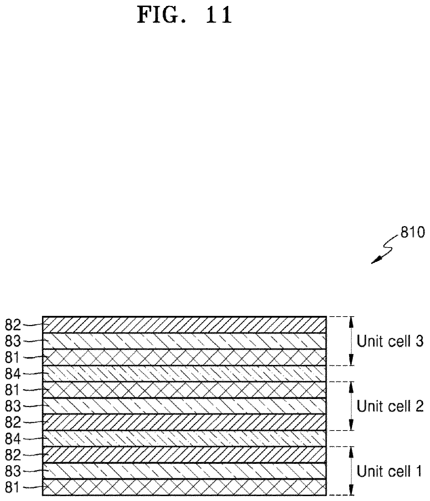

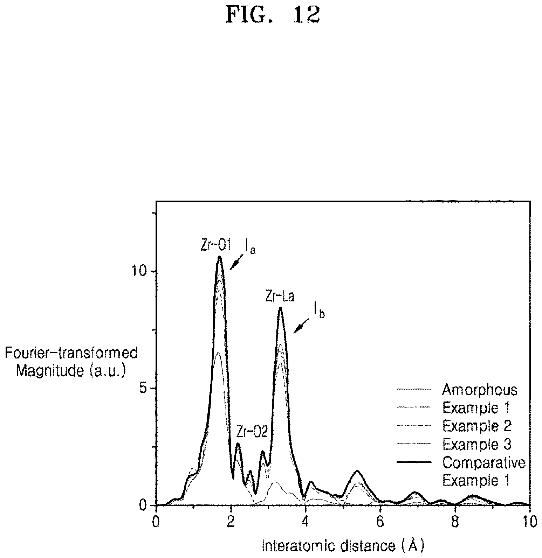

FIGS. 11 and 12 are schematic views showing the structures of multilayer ceramic batteries according to other embodiments. As shown in FIG. 11, in a multilayer ceramic battery 710, a unit cell 1 and a unit cell 2 are stacked through an internal current collector layer 74. Each of unit cell 1 and unit cell 2 is composed of a positive electrode layer 71, a solid-state electrolyte layer 73, and a negative electrode layer 72 stacked in that order. Unit cell 1, unit cell 2, and the internal current collector layer 74 are stacked so that the negative electrode layer 72 of unit cell 2 is adjacent to one side of the internal current collector layer 74 (lower surface in FIG. 11) and the negative electrode layer 72 of unit cell 1 is adjacent to the other side of the internal current collector layer 74 (upper surface in FIG. 11). Although FIG. 11 shows that the internal current collector layer 74 is arranged to be in contact with the negative electrode layer 72 of each of unit cell 1 and unit cell 2, the internal current collector layer 74 may be arranged to be in contact with the positive electrode layer 71 of each of unit cell 1 and unit cell 2. The internal current collector layer 74 includes an electronically conductive material. The internal current collector layer 74 may further include an ion conductive material. Inclusion of additional ion conductive materials improves voltage stabilization characteristics. In the multilayer ceramic battery 710, the same polarity electrode is disposed on both sides of the internal current collector layer 74, and thus, by connecting a plurality of unit cells in parallel through the internal current collector layer 74, a monopolar multilayer ceramic battery 710 can be obtained. Accordingly, the multilayer ceramic battery 710 of high capacity can be obtained. In the multilayer ceramic battery 710, the internal current collector layer 74 interposed between unit cell 1 and unit cell 2 contains an electronic conductive material, and thus, two adjacent unit cells can be electrically connected in parallel, and at the same time, positive electrode layers 71 or negative electrode layers 72 of the two adjacent unit cells can be ionically conductively connected. Accordingly, the potentials of the adjacent positive electrode layers 71 or negative electrode layers 72 can be averaged through the internal current collector layer 74, and thus a stable output voltage can be obtained. In addition, external current collecting members such as tabs can be eliminated, and unit cells constituting the multilayer ceramic battery 710 can be electrically connected in parallel. Accordingly, the multilayer ceramic battery 710 having excellent space utilization and economic efficiency can be obtained. Referring to FIG. 12, a multilayer body contains a positive electrode layer 81, a negative electrode layer 82, a solid-state electrolyte layer 83, and an internal current collector layer 84. The multilayer body was stacked and thermally compressed to obtain a multilayer ceramic battery laminate 810. The positive electrode layer 81 is composed of a single positive electrode layer sheet. The negative electrode layer 82 is composed of two negative electrode layer sheets.

[Preparation method of solid-state electrolyte]

A method for preparing a solid-state electrolyte according to an embodiment may include the steps of: performing heat treatment on a compound of Formula 1 having an amorphous phase at a temperature of 700 °C or lower, for example, 400 °C to 700 °C in an oxidizing gas atmosphere to prepare the solid-state electrolyte.

$$\text{Formula 1} \qquad (Li_xM1_a)(La_yM2_b)(Zr_zM3_c)O_{12}$$

wherein M1 is a monovalent, divalent, trivalent cation, or a combination thereof, M2 is a monovalent, divalent, trivalent cation, or a combination thereof, M3 is a monovalent, divalent, trivalent, tetravalent, pentavalent, hexavalent cation, or a combination thereof, $6 \leq x \leq 8$, $0 \leq a \leq 2$, $2 \leq y \leq 3$, $0 \leq b \leq 1$, $0 < z \leq 2$, and $0 \leq c \leq 2$.

The compound of Formula 1 having the amorphous phase can be prepared by mixing a mixture of precursors for forming a compound of Formula 1 and then the mixture was mechanochemically synthesized.

Oxidizing gas atmosphere means, for example, an oxygen atmosphere or an atmospheric atmosphere.

Precursors for forming the compound of Formula 1 include lithium precursors, lanthanum precursors, and zirconium precursors.

The precursor for forming the compound of Formula 1 may contain a precursor containing element A, a precursor containing element B, a precursor containing element C, or a combination thereof.

The lanthanum precursor, and zirconium precursor are oxides, sulfates, chlorides containing lanthanum and zirconium, respectively.

The A element-containing precursor, the B element-containing precursor, and the C element-containing precursor are oxides, sulfates, chlorides containing elements A, B, and C, respectively.

For example, the lanthanum precursor uses La2O3, LaCl3, etc., and the zirconium precursor uses, for example, ZrO2, ZrCl2, etc. And, for example, Ta2O5, TaCl5, etc. are used as tantalum precursors.

Lithium precursors include, for example, Li2O, LiCl, LiOH, $Li_2(CO_3)$, etc. The lanthanum precursor, zirconium precursor, precursor containing element A, precursor containing element B, precursor containing element C, and lithium precursor may be used in an amount that matches the composition of the amorphous compound of Formula 1.

The mechanochemically synthesis is, for example, mechanical milling. The mechanical milling Includes High-energy mechanical milling (HEMM).

High-energy mechanical milling (HEMM) refers to a process of complexing components by applying mechanical energy.

The high-energy mechanical milling can micronize powder by applying high energy through high rotational force to a reactant material, and can induce a chemical reaction to the reactant material through maximized diffusion between powder particles. In addition, the high-energy mechanical milling is achieved using a mechanofusion device or a novita device, and the mechanofusion is a method for forming a mixture in a dry state by strong physical rotational force, in which electrostatic cohesion between components is produced. Through this process, the compound of Formula 1 can be micronized, and particle powder having a uniform distribution characteristic can be obtained. An average particle diameter of the particles is about 1 nm to about 100 $\mu$m, or about 5 nm to about 80 $\mu$m.

The high-energy mechanical milling is, for example, high-energy ball milling, and the high-energy ball milling may be performed by any suitable ball milling device used for high-energy ball milling, such as a vibratory-mill, a Z-mill, a planetary ball-mill, an attrition-mill, a SPEX mill, a low-temperature mill, a friction mill, a shaker mill, a stirred-ball mill, a mixer-ball mill, or vertical and horizontal attritors.

High-energy mechanical milling devices are commercially available from, for example, SPEX CertiPrep Group L.L.C. (8000 M Mixer/Mill (registered trademark), etc.), Zoz GmbH (Simoloyer (registered trademark)), Retsch GmbH (Planetary Ball Mill PM 200/400/400 MA), and Union Process Inc. (Attritor (registered trademark)), but are not limited thereto.

For example, Pulverisette 7 Premium line equipment may be utilized. By undergoing high-energy milling in this way, the particles of the compound of Formula 1 having a garnet-type crystal structure can be micronized, and reactions thereof can be performed smoothly, thereby preparing a ceramic solid-state electrolyte within a short time.

Pulverized balls used during high-energy ball milling may be, but not limited to, stainless steel beads or zirconia beads ($ZrO_2$), and may have a particle size ranging from about 0.5 mm to about 20 mm. In the step of obtaining a high-energy mechanically milled product, the pulverization time ranges from about 0.5-150 hours.

The high-energy mechanical milling may be performed in a dry manner in an inert atmosphere for about 0.5-1000 hours, about 0.5-100 hours, or about 10-30 hours. The high-energy mechanical milling may be performed in a dry manner in an inert atmosphere at a rate of about 300-10000 rotation per minute (rpm), about 350-5000 rpm, or about 370-1000 rpm. The high-energy mechanical milling may be performed for about 0.5-150 hours. During the high-energy ball milling, the temperature may rise to about 200 °C in the course of ball milling, and the pressure may become on the order of about 6 gigapascals (GPa). For example, Pulverisette 7 Premium line equipment may be utilized.

As described above, by undergoing the high-energy mechanical milling, the components of the mixture can be micronized, and these reactions can be performed smoothly, allowing the solid-state electrolyte to be prepared within a short time.

As the result of the high-energy mechanical milling, the particle size becomes about 1 nm to about 100 $\mu$m, about 10 nm to about 80 $\mu$m, about 100 nm to about 50 $\mu$m, about 500 nm to about 30 $\mu$m, about 1 $\mu$m to about 10 $\mu$m, or about 1 $\mu$m to about 5 $\mu$m.

The high-energy mechanical milling may be performed in an inert atmosphere, and the inert atmosphere may be an atmosphere substantially free of oxygen. The inert atmosphere may be, for example, an atmosphere including nitrogen, argon, neon, or a combination thereof. Mechanochemical reactions may, for example, be exothermic. The reaction for forming a solid-state electrolyte containing the compound represented by Formula 1 may be an exothermic reaction. The temperature of the exothermic reaction may be, for example, about 100-500 °C, about 100-400 °C, about 100-300 °C, or about 100-200 °C. Mechanical milling may be performed in a dry manner, for example, without the use of a solvent, etc. Since mechanical milling is performed in a dry manner, post-processing processes, such as solvent removal, etc. can be omitted.

The product obtained through the high-energy mechanical milling is in an amorphous state. The product in an amorphous state is pelletized and then thermally treated at a temperature of about 700 °C or less, for example, about 400 °C to about 700 °C, about 450 °C to about 650 °C, or about 500 °C to about 600 °C, for about 0.5 to 30 hours, about 1 to 20 hours, or about 5 to 15 hours, thereby obtaining a garnet-type ceramic solid-state electrolyte. In this way, by pelletizing the product in an amorphous state and then performing heat treatment at low temperature, a solid-state electrolyte having improved stability and high ionic conductivity can be obtained without additional sintering treatment for densification.

The step of preparing the solid-state electrolyte may be performed without additional heating for densification, e.g., at a high temperature of about 1,200 °C, as described above. In the step of preparing the solid-state electrolyte, a step of externally applying heat energy, such as a separate heat treatment step, may not be performed. By not including an additional heat treatment step, a solid-state electrolyte containing the compound represented by Formula 1 can be prepared in a more simplified and economical manner.

During high-energy mechanical milling, an organic solvent may be added, as desired. By performing bead mill pulverization in an organic solvent, lithium (Li) components can be prevented from being dissolved in a pulverized product, and a fine pulverized product with a uniform composition can be obtained.

The organic solvent may be alcohol-based solvents, ketone-based solvents, ester-based solvents, glycol ether-based solvents, hydrocarbon-based solvents, ether solvents, glycol-based solvents, amine-based solvents, or a combination thereof, and examples thereof include: alcohol-based solvents such as methanol, ethanol, butanol, hexanol, benzyl alcohol, or isopropyl alcohol; ketone-based solvents such as acetone, methyl ethyl ketone, methyl isobutyl ketone, and cyclohexanone; ester-based solvents such as methyl acetate, ethyl acetate, or butyl acetate; glycol ether solvents such as propylene glycol monomethyl ether, ethylene glycol monoethyl ether, ethyl glycol monobutyl ether, 3-methoxy-3 methyl-1-butanol, or diethylene glycol monobutyl ether; hydrocarbon-based solvents such as benzene, toluene, xylene, cyclohexane, methylcyclohexane, ethylcyclohexane, mineral oil, n-paraffin, or iso-paraffin; ether-based solvents such as 1,3-dioxolane, 1,4-dioxane, or tetrahydrofuran; glycol-based solvents such as ethylene glycol, diethylene glycol, propylene glycol, and polyethylene glycol; and amine-based solvents such as monoethanolamine, diethylamine, triethanolamine, N-methyl-2-pyrrolidone, 2-amino-2-methyl-1-propanol, or N, N-dimethylformamide. If the organic solvent having highly hydrophobic is used, lithium (Li) is difficult to dissolve, and thus the crystallinity of LLZO can be easily maintained. In addition, by using toluene as the organic solvent, the production of impurity phases can be further suppressed.

Hereinafter, detailed descriptions will be made with reference to examples and comparative examples, but is not limited to the examples below.

EXAMPLES

Reference Example 1: Synthesis of amorphous $Li_{6.5}La_3Zr_{1.5}Ta_{0.5}O_{12}$

To obtain amorphous $Li_{6.5}La_3Zr_{1.5}Ta_{0.5}O_{12}$, precursors $Li_2O$, $La_2O_3$, $ZrO_2$, and $Ta_2O_5$ were stoichiometrically mixed, put into a high-energy ball mill, and dry milled for 15 hours in an inert atmosphere to prepare amorphous $Li_{6.5}La_3Zr_{1.5}Ta_{0.5}O_{12}$. During the high-energy ball milling process, the internal temperature of a ball mill reactor was 100 °C or greater. This product was obtained in a powder form having an average particle diameter (D50) of approximately 2 $\mu$m.

(Preparation of electrolyte)

Example 1

The amorphous $Li_{6.5}La_3Zr_{1.5}Ta_{0.5}O_{12}$ obtained according to Reference Example 1 was thermally treated in an air atmosphere at a temperature of 400 °C for 2 hours at a temperature-increasing rate of about 5 °C/min to prepare a ceramic solid-state electrolyte $Li_{6.5}La_3Zr_{1.5}Ta_{0.5}O_{12}$.

Examples 2-4

Solid-state electrolytes were prepared in the same manner as in Example 1, except that the heat treatment was performed at temperatures of 500 °C, 600 °C, and 700 °C, respectively, instead of 400 °C.

Comparative Example 1: Room-temperature pelletization of cubic crystalline garnet

Pellets were obtained by pelletizing $Li_{6.5}La_3Zr_{1.5}Ta_{0.5}O_{12}$ having a garnet-type crystal structure (cubic phase) at room temperature (25 °C). Next, the pellets were thermally heated at 1000 °C for 120 minutes to prepare a solid-state electrolyte.

Comparative Examples 2-3

Solid-state electrolytes were prepared in the same manner as in Example 1, except that the heat treatment was performed at temperatures of 800 °C and 900 °C, respectively, instead of 400 °C.

Table 1 below shows the states of the solid-state electrolytes prepared in Examples 1 to 4, Comparative Examples 1 to 3, and Reference Example 1.

[Table 1]

| Classification | Structure |
|---|---|
| Example 1 | Crystalline (distorted cubic garnet) |
| Example 2 | Crystalline (distorted cubic garnet) |
| Example 3 | Crystalline (distorted cubic garnet) |

(continued)

| Classification | Structure |
|---|---|
| Example 4 | Crystalline (distorted cubic garnet) |
| Comparative example 1 | Crystalline |
| Comparative example 2 | Crystalline (distorted cubic garnet) |
| Comparative example 3 | Crystalline (distorted cubic garnet) |
| Reference example 1 | Amorphous |

(Preparation of all-solid-state secondary battery)

Example 5

As a solid-state electrolyte layer, 500 $\mu$m thick LLZO($Li_7La_3Zr_2O_{12}$) pellets were prepared. Separately, a first negative electrode active material layer slurry was barcoated on an SUS foil, and then dried at room temperature (25 °C) for 1 hour to form a second negative electrode active material layer (AgC layer) (thickness: about 7 $\mu$m) on the SUS foil.

The first negative electrode active material layer slurry was prepared according to the following process. Carbon black (CB) particles having a primary particle diameter of approximately 38 nm and silver (Ag) particles having an average particle diameter of approximately 100 nm were prepared as negative electrode active materials.

3 grams (g) of carbon black (CB) and 1 g of silver particles were added to a container, 2.692g of polyvinyl alcohol/polyacrylic acid (PVA-PAA) binder solution (SUMITOMO SEIKA CHEMICALS CO., LTD, AG binder) was mixed with 7g of distilled water and then added to the container, and primarily stirred at 1000 rpm for 30 minutes to prepare a first slurry. Zirconia balls (4 g) and 20 g of distilled water were added to the first slurry, and secondly stirred at 1000 rpm for 30 minutes to prepare a second slurry. 20 g of distilled water was added to the second slurry, and thirdly stirred at 1000 rpm for 30 minutes to prepare a third slurry.

Meanwhile, the LLZO film was treated with acid to prepare an LLZO film having pores. During acid treatment, a 1M hydrochloric acid aqueous solution was used as the acid solution, dipped for 1 second, and then washed with ethanol.

A first negative electrode active material layer (AgC layer) was placed on the LLZO film, and the stainless steel (SUS) foil was removed. A lithium metal foil (thickness: 20 $\mu$m) and a copper foil as a negative electrode current collector were again brought into contact with the upper side of the first negative electrode active material layer by applying 250 MPa at 25 °C using cold isotactic pressing (CIP), thereby manufacturing a solid electrolyte layer/first negative electrode active material layer/lithium metal/copper thin film laminate.

As a positive electrode active material, $LiNi_{1/3}Co_{1/3}Mn_{1/3}O_2$ (NCM) was prepared, and as a solid-state electrolyte, a ceramic solid electrolyte $Li_{6.5}La_3Zr_{1.5}Ta_{0.5}O_{12}$ of Example 1 was prepared. In addition, as a binder, a polytetrafluoroethylene (Teflon (registered trademark) binder manufactured by DuPont) was prepared. In addition, carbon nanofibers (CNF) were prepared as a conductive aid. Next, these positive electrode materials were mixed at a weight ratio of positive electrode active material: solid-state electrolyte: conductive aid: binder = 80:20:2:1. The mixture was stretched into a sheet form to produce a positive electrode active material sheet. Then, the positive electrode layer was produced by pressing the positive electrode active material sheet onto a positive electrode current collector made of an 18 $\mu$m thick aluminum foil.

The positive electrode active material layer of the produced positive electrode layer was impregnated in an electrolyte liquid containing 2.0M lithium bis(trifluoromethanesulfonyl)imide (LiFSI) dissolved in an ionic liquid PYR13FSI (N-propyl-N-methyl-pyrrolidinium bis(fluorosulfonyl)imide).

The positive electrode layer was placed inside an SUS cap so that the positive electrode active material layer impregnated in the electrolyte liquid was disposed to face upward. An all-solid-state secondary battery was manufactured by placing a solid-state electrolyte layer/negative electrode layer laminate having a negative electrode layer attached thereto so that the solid-state electrolyte layer was disposed on the positive electrode active material layer, followed by sealing. The positive electrode layer and the negative electrode layer were insulated with an insulator. Portions of the positive electrode current collector and the negative electrode current collector were allowed to protrude to the outside of the sealed battery and were used as a positive electrode layer terminal and a negative electrode layer terminal.

Comparative Example 4

An all-solid-state secondary battery was manufactured by the same method as Example 5, except that, when a positive electrode is prepared, the solid electrolyte of Comparative Example 1 was used, instead of the ceramic solid-state electrolyte $Li_{6.5}La_3Zr_{1.5}Ta_{0.5}O_{12}$ of Example 1.

Evaluation Example 1: X-ray diffraction analysis

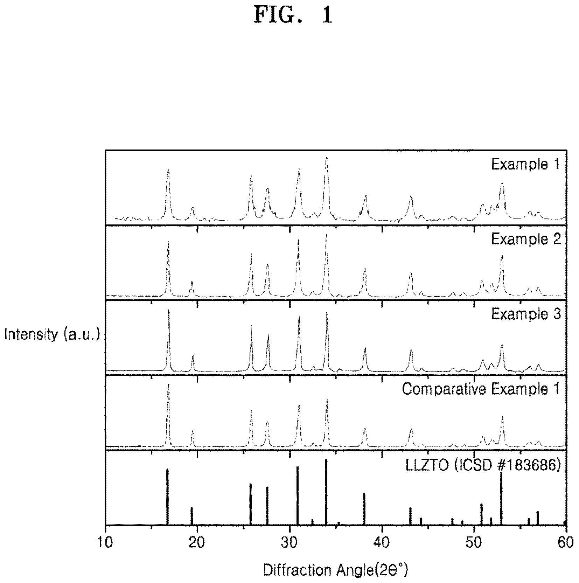

XRD spectra were measured for the solid-state electrolyte powders or pellets prepared in Examples 1 to 3 and Comparative Example 1, and the results are shown in FIG. 1. In FIG. 1, the XRD spectrum indicated by "LLZTO" is for $Li_{6.5}La_3Zr_{1.5}Ta_{0.5}O_{12}$ having the cubic phase of $Li_{6.5}La_3Zr_{1.5}Ta_{0.5}O_{12}$.
The XRD spectra were measured using X'pert pro (PANalytical) using Cu K$\alpha$ radiation (1.54056 Å), and the full width at half maximum (FWHM) at the diffraction angle 2$\theta$=16.8°2$\theta$ $\pm$0.5°2$\theta$ was measured and shown in Table 2.

[Table 2]

| Classification | Material ($Li_{6.5}La_3Zr_{1.5}Ta_{0.5}O_{12}$) | Synthesis temperatur e (°C) | FWHM (°) (2$\theta$=16.8$\pm$0.5°) |
|---|---|---|---|
| Example 1 | Crystalline (distorted cubic garnet) | 400 | 0.349 |
| Example 2 | Crystalline (distorted cubic garnet) | 500 | 0.219 |
| Example 3 | Crystalline (distorted cubic garnet) | 600 | 0.177 |
| Comparative Example 1 | Crystalline garnet (cubic garnet) | 1000 | 0.138 |
| Comparative Example 2 | Crystalline (distorted cubic garnet) | 800 | <0.15 |
| Comparative Example 3 | Crystalline (distorted cubic garnet) | 900 | <0.15 |

As shown in Table 2 and FIG. 1, the solid-state electrolyte of Comparative Example 1 has a garnet-type crystal structure and has a very small FWHM of about 0.138°2$\theta$. In addition, the solid-state electrolytes of Comparative Examples 2 and 3, like the solid-state electrolyte of Comparative Example 1, showed FWHM values of less than 0.15°.
In contrast, as shown in Table 2 and FIG. 1, the solid-state electrolytes of Examples 1 to 3 had a ceramic structure including a cubic phase as the main phase, and due to low crystallinity, the FWHM was greatly increased.

Evaluation Example 2: Measurement of ionic conductivity and activation energy

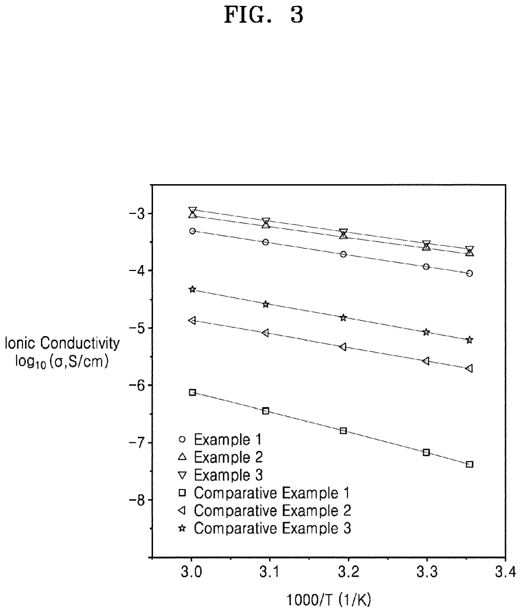

A shielding electrode was deposited on both sides of each of the solid-state electrolyte pellets prepared in Examples 1 to 4 and Comparative Examples 1 to 3 by sputtering a gold (Au) electrode. For specimens having shielding electrodes formed on both sides, the impedance was measured by employing a 2-probe method using an impedance analyzer (Solartron 1400A/1455A impedance analyzer). The frequency range was 1 Hz to 1 MHz, and the amplitude voltage was 10 mV. Measurements were made at 25 °C in a dry air atmosphere. The resistance value was obtained from the arc of the Nyquist plot for the impedance measurement results, and the electrode area and pellet thickness were corrected from this to calculate the ionic conductivity, and the results are shown in FIG. 3 and Table 3.
The total resistance ($R_{total}$) value is obtained from the impedance results, and the conductivity value is calculated by correcting the electrode area and pellet thickness from this value. In addition, when electrochemical impedance spectroscopy (EIS) is performed, the activation energy (Ea) value for Li ion conduction was calculated from the results measured by changing the temperature of a chamber in which each oxide sample was loaded. The Ea value can be calculated from the slope value by converting the conductivity value measured at each temperature in the range of 298-333 K into the Arrhenius plot (Ln ($\sigma$T) vs. 1/T) of Equation 1.

## Equation 1

$$\sigma T = A \exp(Ea/RT)$$

where Ea is the activation energy, T is the absolute temperature, A is the pre-exponential factor, R is the gas constant, and $\sigma$ is the conductivity.
The activation energy obtained according to the above-described process is shown in Table 3 below, and the ionic conductivity for each compound was calculated using Equation 2 and shown in FIG. 3 and Table 3.

# Equation 2

$$\sigma = A\exp(-E_a/kT)$$

where $\sigma$ is the conductivity, A is the pre-exponential factor, $E_a$ is the activation energy, k is the Boltzmann constant, and T is the absolute temperature.

[Table 3]

| Classification | Activation energy [eV] | Ionic conductivity [S/cm] |
|---|---|---|
| Example 1 | 0.391 | $7.40 \times 10^{-5}$ |
| Example 2 | 0.387 | $1.78 \times 10^{-4}$ |
| Example 3 | 0.368 | $2.47 \times 10^{-4}$ |
| Comparative Example 1 | 0.710 | $4.20 \times 10^{-8}$ |
| Comparative Example 2 | 0.471 | $1.95 \times 10^{-6}$ |
| Comparative Example 3 | 0.493 | $6.91 \times 10^{-6}$ |
| Reference Example 1 | - | - |

As shown in FIG. 3 and Table 3, the solid-state electrolyte of Comparative Example 1, in which LLZO, which has a garnet-type crystal structure (cubic phase), was pelletized at room temperature and thermally treated at a low temperature of 700 °C or less without a high-temperature sintering process of 1,000 °C or greater, showed very low ionic conductivity.

The solid-state electrolytes of Comparative Examples 2 and 3, in which after high-energy ball milling, crystallization progressed significantly through heat treatment at 800 °C and 900 °C, respectively, had decreased ionic conductivity.

In contrast, the solid-state electrolytes of Examples 1 to 3, which were thermally treated at a temperature of 700 °C or less after high-energy ball milling, showed high ionic conductivity even without a high-temperature sintering process, and showed significantly increased ionic conductivity compared to the solid-state electrolytes of Comparative Examples 1 to 3. In addition, the solid-state electrolyte of Example 4 showed ionic conductivity similar to that of the solid-state electrolyte of Example 3.

In addition, the solid-state electrolytes of Examples 1 to 3 showed less activation energy values than the oxides of Comparative Examples 1 to 3. In addition, the solid-state electrolyte of Example 4 showed activation energy similar to that of the solid-state electrolyte of Example 3.

In this way, when the activation energy of a solid-state electrolyte is reduced, the ionic conductivity is improved at low temperatures.

Evaluation Example 3: SEM analysis

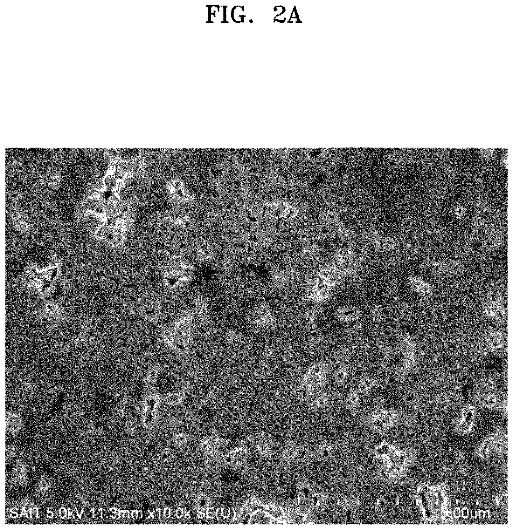

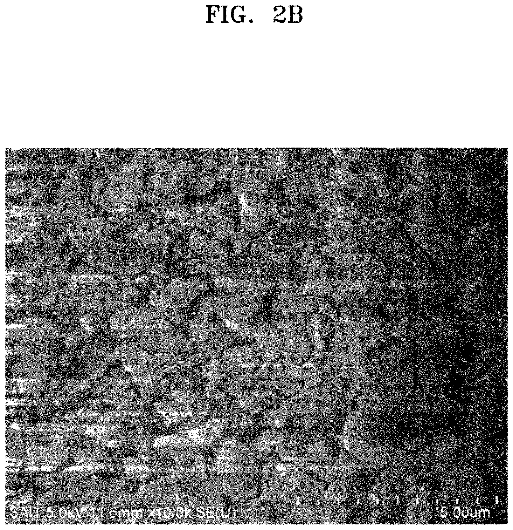

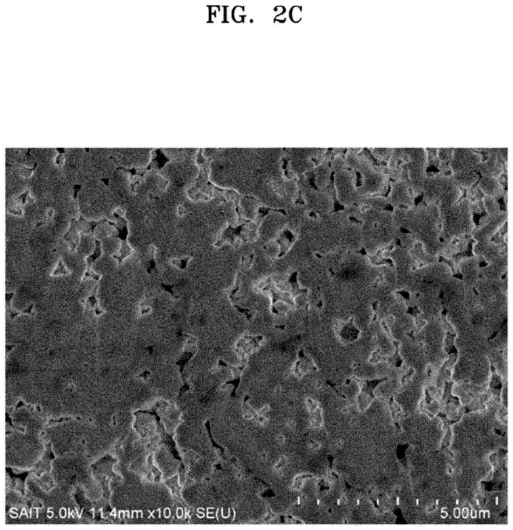

Scanning electron microscopy (SEM) analysis was performed on the cross sections of the solid-state electrolytes prepared in Example 1, Comparative Example 1, and Reference Example 1, and the results are shown in FIGS. 2A, 2B, and 2C. As the scanning electron microscope (SEM), Hitachi's SU-8030 was used.

Referring to FIG. 2B, the crystalline LLZO of Comparative Example 1 had grain boundaries observed and poor contacts between particles.

In contrast, it was found that the ceramic LLZO solid-state electrolyte of Example 1 had good interconnection based on relatively soft physical properties. In addition, it was found that the solid-state electrolyte of Example 1 had no grain boundaries, like the solid-state electrolyte of Reference Example 1, and decreased porosity compared to the crystalline solid-state electrolyte of Comparative Example 1. From this, it was found that the solid-state electrolyte of Example 1 could have improved deformability compared to the solid-state electrolytes of Comparative Examples.

Evaluation Example 4: XAFS Analysis

X-ray absorption fine structure (XAFS) analysis was performed on the solid-state electrolytes prepared according to Examples 1-4, Comparative Example 1, and Reference Example 1.

XAFS measurement was performed at 10C beamline of Pohang Accelerator Laboratory, Korea. The XAFS is an analysis method for measuring the intensity of X-rays absorbed by irradiating a sample with high-intensity X-rays. Based on the X-ray absorption spectrum derived by measuring the light absorption coefficient ($x\mu$) according to the X-ray energy (eV), the peak area ratio (%) and intensity ratio of Zr-O and Zr-La in the solid-state electrolytes can be identified. Here, the absorption spectrum was derived through XANES (X-ray absorption near edge structure) of analyzing the XAFS spectrum within 50 eV near the absorption edge, where X-ray absorption rapidly increases.

The extended X-ray absorption fine structure (EXAFS) analysis results are shown in FIG. 13, and through this analysis result, the intensity ratios of the first and second peaks were measured and the results are shown in Table 4. In FIG. 13, the line indicated as "Amorphous" is for Reference Example 1.

[Table 4]

| Classification | Intensity ratio ($I_b/I_a$) |
|---|---|
| Example 1 | 0.68 |
| Example 2 | 0.65 |
| Example 3 | 0.69 |
| Comparative Example 1 | 0.79 |

Referring to FIG. 13 and Table 4, the solid-state electrolyte of Comparative Example 1 having a cubic garnet structure had a ratio of an intensity of a first peak corresponding to an interatomic distance of 1.5 angstroms $\pm$ 0.5 angstrom and an intensity of a second peak corresponding to an interatomic distance of 3.0 angstroms $\pm$0.5 angstrom ($I_b/I_a$) of 0.79, whereas the solid-state electrolytes of Examples 1 to 3 showed $I_b/I_a$ of 0.75 or less. In addition, although not shown in Table 4, the solid-state electrolyte of Example 4 showed $I_b/I_a$ of 0.75 or less. Accordingly, it was found that the solid-state electrolytes of Examples 1 to 3 had a partially distorted cubic garnet structure with a locally somewhat distorted shape because the Zr-O bond and Zr-La bond thereof are different from those of the solid-state electrolyte of Comparative Example 1.

Evaluation Example 5: Room temperature charge/discharge test

The charge/discharge characteristics of the all-solid-state secondary batteries prepared in Example 5 and Comparative Example 4 were evaluated by the following charge/discharge test. The charge/discharge test was performed by placing the all-solid-state secondary battery in a constant temperature bath at 25 °C.

In the first cycle, charging was performed at a constant current of 0.6 mA/cm$^2$ until the battery voltage reached 4.3 V. Subsequently, discharging was performed at a constant current density of 0.6 mA/cm$^2$ until the battery voltage reached 2.8 V.

In the 2nd to 13th cycles, charging was performed with a constant current of 1.5 mA/cm$^2$ until the battery voltage reached 4.3V. Subsequently, discharging was performed at a constant current of 1.5 mA/cm$^2$ until the battery voltage reached 2.8 V.

In the 13th to 150th cycles, charging was performed with a constant current density of 2.55 mA/cm$^2$ until the battery voltage reached 4.3V. Subsequently, discharging was performed at a constant current density of 2.55 mA/cm$^2$ until the battery voltage reached 2.8 V.

As a result of the charge/discharge test, the all-solid-state secondary battery of Example 5 was subjected to charging and discharging up to 50 cycles without short circuits, showed stable charge/discharge even at a current density of 2. 55 mA/cm$^2$, and showed high charge/discharge efficiency. In addition, the all-solid-state secondary battery of Example 5 had an improved capacity retention compared to the all-solid-state secondary battery of Comparative Example 4.

According to an aspect, a solid-state electrolyte and a method for manufacturing the same are provided, the solid-state electrolyte having high ionic conductivity and improved deformability along with improved stability through ceramicization under heat treatment at a temperature of 700 °C or less. By using the solid-state electrolyte, a lithium battery having improved cycle characteristics can be provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A solid-state electrolyte comprising a compound represented by Formula 1:

   Formula 1　　　　　$(Li_xM1_a)(La_yM2_b)(Zr_zM3_c)O_{12}$

   wherein in Formula 1,

   M1 is a monovalent cation, a divalent cation, a trivalent cation, or a combination thereof,
   M2 is a monovalent cation, a divalent cation, a trivalent cation, or a combination thereof,
   M3 is a monovalent cation, a divalent cation, a trivalent cation, a tetravalent cation, a pentavalent cation, a hexavalent cation, or a combination thereof,
   $6 \leq x \leq 8$, $0 \leq a \leq 2$, $2 \leq y \leq 3$, $0 \leq b \leq 1$, $0 < z \leq 2$, and $0 \leq c \leq 2$,

   wherein, in an extended X-ray absorption fine structure spectrum of Zr in the solid-state electrolyte, a ratio of an intensity of a first peak corresponding to an interatomic distance of $1.5 \pm 0.5$ angstroms and an intensity of a second peak corresponding to an interatomic distance of $3.5 \pm 0.5$ angstroms is 0.3 to 0.75, and
   an ionic conductivity of the solid-state electrolyte is $7 \times 10^{-6}$ Siemens per centimeter to $1 \times 10^{-2}$ Siemens per centimeter.

2. The solid-state electrolyte of claim 1, wherein in an X-ray diffraction spectrum of the solid-state electrolyte, a full width at half maximum of a peak at a diffraction angle of $16.8°2\theta \pm 0.5°2\theta$ is $0.15°2\theta$ or greater, preferably $0.15°2\theta$ to $0.6°2\theta$.

3. The solid-state electrolyte of claims 1 or 2, wherein the solid-state electrolyte comprises a crystalline phase.

4. The solid-state electrolyte of claim 3, wherein the crystalline phase has a cubic phase, and the cubic phase is 60 weight percent or greater based on a total content of the crystalline phase; and/or
   wherein the crystalline phase comprises a cubic phase and a tetragonal phase, and a content of the tetragonal phase is less than 10 weight percent based on a total content of the crystalline phase.

5. The solid-state electrolyte of any of claims 1-4, wherein

   the monovalent cation in M1, M2, and M3, each independently includes Li, Na, K, or a combination thereof, and
   the divalent to hexavalent cation in M1, M2, and M3, each independently includes Mg, Ca, Sr, Sc, Y, La, Ce, Pr, Nd, Sm, Eu, Gd, Tb, Dy, Ho, Er, Tm, Yb, Lu, Zr, Hf, V, Nb, Ta, Mo, W, Mn, Tc, Re, Fe, Ru, Os, Co, Rh, Ir, Ni, Pd, Pt, Cu, Ag, Au, Zn, Cd, Hg, Al, Ga, In, Tl, Ge, Sn, Pb, Sb, Bi, Po, As, Se, Te, or a combination thereof.

6. The solid-state electrolyte of any of claims 1-5, wherein the solid-state electrolyte represented by Formula 1 is represented by Formula 2:

   Formula 2　　　　$Li_x(La_yM2_b)(Zr_zM3_c)O_{12}$

   wherein in Formula 2, M2 is at least one of calcium, strontium, cesium, or barium,
   M3 is at least one of aluminum, tungsten, niobium, or tantalum,
   $6 \leq x \leq 8$, $2 \leq y \leq 3$, $0 \leq b \leq 1$, $0 < z \leq 2$, and $0.01 \leq c \leq 2$.

7. The solid-state electrolyte of any of claims 1-6, wherein the solid-state electrolyte represented by Formula 1 is represented by Formula 3:

   Formula 3　　　　$(Li_xM1_a)(La_y)(Zr_z)O_{12}$

   wherein in Formula 3, M1 is at least one of Ga Al, or both,
   $6 \leq x \leq 8$, $0 \leq a \leq 2$, $2 \leq y \leq 3$, and $0 < z \leq 2$.

8. The solid-state electrolyte of any of claims 1-7, wherein the solid-state electrolyte represented by Formula 1 is an oxide represented by Formula 4:

Formula 4          $Li_{3+x}La_3Zr_{2-c}M3_cO_{12}$

wherein in Formula 4, M3 is at least one of Gallium, tungsten, niobium, tantalum, aluminum, or a combination thereof,

$3 \leq x \leq 5$, and $0 \leq c \leq 0.7$.

9. The solid-state electrolyte of any of claims 1-8,
wherein the crystalline phase has a cubic phase crystal structure as a major phase, and
a content of the cubic phase is 60 weight percent or greater based on a total content of the crystalline phase.

10. The solid-state electrolyte of claim 9, wherein the crystalline phase comprises a cubic phase and a tetragonal phase, and
a content of the tetragonal phase is less than 10 weight percent based on a total content of the crystalline phase.

11. The solid-state electrolyte of any of claims 1-10, wherein an activation energy of the solid-state electrolyte is 0.5 electronvolt or less, and
a lithium diffusion barrier of the solid-state electrolyte is 625 millielectronvolts or less.

12. A lithium battery comprising:

a positive electrode; a negative electrode; and
a solid electrolyte disposed between the positive electrode and the negative electrode,
wherein the positive electrode, the negative electrode, the solid electrolyte, or a combination thereof, comprises the solid-state electrolyte of any of claims 1-11;
preferably wherein the lithium battery is a lithium-ion battery, an all-solid-state battery, or a multilayer ceramic battery.

13. The lithium battery of claim 12, wherein the positive electrode comprises the solid-state electrolyte comprising the compound represented by Formula 1 and comprising a crystalline phase;
preferably wherein in an X-ray diffraction spectrum of the solid-state electrolyte, a full width at half maximum of a peak at a diffraction angle of $16.8°2\theta \pm 0.5°2\theta$ is $0.15°2\theta$ or greater.

14. A method for preparing a solid-state electrolyte, the method comprising: performing heat treatment on the compound of Formula 1 having an amorphous phase at a temperature of 700 °C or lower in an oxidizing gas atmosphere to prepare the solid-state electrolyte of any of claims 1-11.

        <Formula 1>          $(Li_xM1_a)(La_yM2_b)(Zr_zM3_c)O_{12}$

wherein in Formula 1,

M1 is a monovalent cation, a divalent cation, a trivalent cation, or a combination thereof,
M2 is a monovalent cation, a divalent cation, a trivalent cation, or a combination thereof,
M3 is a monovalent cation, a divalent cation, a trivalent cation, a tetravalent cation, a pentavalent cation, a hexavalent cation, or a combination thereof,
$6 \leq x \leq 8$, $0 \leq a \leq 2$, $2 \leq y \leq 3$, $0 \leq b \leq 1$, $0 < z \leq 2$, and $0 \leq c \leq 2$.

15. The method of claim 14, wherein the compound of Formula 1 having the amorphous phase is obtained by high-energy mechanical milling of a precursor for forming a compound of Formula 1;
preferably wherein the heat treatment comprises heat treating at 400 °C to 700 °C.

FIG. 1

FIG. 2A

# FIG. 2B

SAIT 5.0kV 11.6mm x10.0k SE(U)　　5.00um

FIG. 2C

SAIT 5.0kV 11.4mm x10.0k SE(U)    5.00um

FIG. 3

FIG. 4

# FIG. 5

FIG. 6

1

4
2
4
3

7

8

5

# FIG. 7

# FIG. 8

# FIG. 9

Difficult to distinguish 111 and 112,
please point to the outer line

110

111  112

130

150

140

140

121  122

120

# FIG. 10

710

71
73
72
74
72
73
71

Unit cell 1

Unit cell 2

FIG. 11

810

| | | Unit cell 3 |
| 82 | | |
| 83 | | |
| 81 | | |
| 84 | | |
| 81 | | Unit cell 2 |
| 83 | | |
| 82 | | |
| 84 | | |
| 82 | | Unit cell 1 |
| 83 | | |
| 81 | | |

FIG. 12

**EUROPEAN SEARCH REPORT**

Europäisches Patentamt
European Patent Office
Office européen des brevets

Application Number

EP 24 16 5427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHENG LEI ET AL: "Enhanced lithium ion transport in garnet-type solid state electrolytes", JOURNAL OF ELECTROCERAMICS, KLUWER ACADEMIC PUBLISHERS, BOSTON, MA, US, vol. 38, no. 2, 15 March 2017 (2017-03-15), pages 168-175, XP036363426, ISSN: 1385-3449, DOI: 10.1007/S10832-017-0080-3 [retrieved on 2017-03-15] * figure 3, figure 4 and figure 10 and the first full paragraph in the right hand column on page 173; 1. Introduction * ----- | 1-15 | INV. C04B35/486 C01G25/00 C04B35/626 C04B35/64 H01M10/0562 |
| X | KUO CHUN-HAN ET AL: "A novel garnet-type high-entropy oxide as air-stable solid electrolyte for Li-ion batteries", APL MATERIALS, AMERICAN INSTITUTE OF PHYSICS, 2 HUNTINGTON QUADRANGLE, MELVILLE, NY 11747, vol. 10, no. 12, 9 December 2022 (2022-12-09), XP012270779, DOI: 10.1063/5.0123562 [retrieved on 2022-12-09] * II. Experimental Section: A. Synthesis of garnet materials; B. Material characterization; Figure 5; Figure 6(g) * ----- | 1-15 | |
| | | | TECHNICAL FIELDS SEARCHED (IPC) |
| | | | C04B C01G H01M |

-/--

The present search report has been drawn up for all claims

| Place of search | Date of completion of the search | Examiner |
|---|---|---|
| Munich | 29 July 2024 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 16 5427

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PADARTI JEEVAN KUMAR ET AL: "Low-temperature processing of Garnet-type ion conductive cubic Li7La3Zr2O12powders for high performance all solid-type Li-ion batteries", JOURNAL OF THE TAIWAN INSTITUTE OF CHEMICAL ENGINEERS, ELSEVIER, AMSTERDAM, NL, vol. 90, 28 March 2018 (2018-03-28), pages 85-91, XP085430046, ISSN: 1876-1070, DOI: 10.1016/J.JTICE.2018.02.021 * 2. Experimental; 3. Results and Discussion; table 1; figure 1; figure 6 * | 1-15 | |
| X | DEREK K SCHWANZ ET AL: "Ionic conductivity enhacements and low temperature synthesis of Li7La3Zr2O12 garnets by Bi aliovalent substitutions", ARXIV.ORG, CORNELL UNIVERSITY LIBRARY, 201 OLIN LIBRARY CORNELL UNIVERSITY ITHACA, NY 14853, 19 February 2019 (2019-02-19), XP081030625, * figure 2B; table I * | 1-15 | TECHNICAL FIELDS SEARCHED (IPC) |
| X | CN 115 210 184 A (AIST) 18 October 2022 (2022-10-18) * figures; examples * | 1-15 | |

The present search report has been drawn up for all claims

| Place of search | Date of completion of the search | Examiner |
|---|---|---|
| Munich | 29 July 2024 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 5427

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2024

| Patent document cited in search report | Publication date | Patent family member(s) | | Publication date |
|---|---|---|---|---|
| CN 115210184 A | 18-10-2022 | CN | 115210184 A | 18-10-2022 |
| | | JP | 7478414 B2 | 07-05-2024 |
| | | JP | 2021138554 A | 16-09-2021 |
| | | KR | 20220137048 A | 11-10-2022 |
| | | WO | 2021177070 A1 | 10-09-2021 |

EPO FORM P0459

For more details about this annex : see Official Journal of the European Patent Office, No. 12/82